(19) Europäisches Patentamt
European Patent Office
Office européen des brevets

(11) EP 1 055 712 B1

(12) **EUROPEAN PATENT SPECIFICATION**

(45) Date of publication and mention of the grant of the patent:
**16.02.2005 Bulletin 2005/07**

(51) Int Cl.[7]: **C09D 11/02**, C09D 11/10, C09B 29/09, C09B 29/00

(21) Application number: **00304377.5**

(22) Date of filing: **24.05.2000**

(54) **Aqueous ink for ink jet recording**

Wässrige Tinte für das Tintenstrahlaufzeichnen

Encre aqueuse pour impression a jet d'encre

(84) Designated Contracting States:
**DE FR GB**

(30) Priority: **25.05.1999 JP 14497099**

(43) Date of publication of application:
**29.11.2000 Bulletin 2000/48**

(73) Proprietor: **MITSUI CHEMICALS, INC.**
**Tokyo (JP)**

(72) Inventors:
- **Matsuzaki, Yoriaki**
  **Chiba-ken 299-0125 (JP)**
- **Oi, Ryu**
  **Kanagawa-ken 247-0008 (JP)**
- **Okuma, Tadashi**
  **Chiba-ken299-0125 (JP)**
- **Kohgo, Osamu**
  **Kanagawa-ken 244-0842 (JP)**

(74) Representative: **Nicholls, Kathryn Margaret et al**
**Mewburn Ellis LLP**
**York House**
**23 Kingsway**
**London WC2B 6HP (GB)**

(56) References cited:
**US-A- 4 313 731** **US-A- 5 233 028**

- **DATABASE CHEMABS [Online] CHEMICAL ABSTRACTS SERVICE, COLUMBUS, OHIO, US; MURATA, JUKICHI: "Thermal-transfer printing by using dicyanoimidazolyl anilino azo sublimation dye" retrieved from STN Database accession no. 114:124596 XP002177100 & DATABASE CAPLUS [Online] CHEMICAL ABSTRACTS SERVICE, COLUMBUS, OHIO, US; & JP 02 241784 A (MITSUBISHI KASEI CORP., JAPAN) 26 September 1990 (1990-09-26)**
- **PATENT ABSTRACTS OF JAPAN vol. 006, no. 202 (C-129), 13 October 1982 (1982-10-13) & JP 57 109859 A (MITSUBISHI KASEI KOGYO KK), 8 July 1982 (1982-07-08) & DATABASE CAPLUS [Online] CHEMICAL ABSTRACTS SERVICE, COLUMBUS, OHIO, US; JP-A-57 109 859,**
- **PATENT ABSTRACTS OF JAPAN vol. 005, no. 132 (C-068), 22 August 1981 (1981-08-22) & JP 56 067367 A (MITSUBISHI CHEM IND LTD), 6 June 1981 (1981-06-06) & DATABASE CAPLUS [Online] CHEMICAL ABSTRACTS SERVICE, COLUMBUS, OHIO, US; JP-A-57 109 859,**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 055 712 B1

Printed by Jouve, 75001 PARIS (FR)

## Description

The present invention relates to ink for ink jet recording which is suited for ink jet recording system. More specifically, it relates to resin fine particles colored with coloring matter especially suited for ink for ink jet recording, a dispersion of the resin fine particles in an aqueous medium, and ink for ink jet recording using the same.
Aqueous ink has been ordinarily used as ink for ink jet recording system. Aqueous ink basically comprises a coloring matter, water and an organic solvent, and it contains water as a main solvent in consideration of an odor and a safety to human bodies and surroundings. Further, as a coloring matter, water-soluble dyes such as acid dyes, basic dyes, reactive dyes and direct dyes are generally used.
With respect to ink for ink jet recording and a coloring matter, the following various characteristics are required. That is:

(1) Properties of ink, such as a viscosity, a surface tension, a specific conductivity, a density and a pH are appropriate.
(2) A long-term storage stability of ink is good.
(3) A dissolution stability of a dissolution component is so high that clogging of a nozzle does not occur.
(4) A quick-drying property in a recording material is good.
(5) A recorded image is vivid, and a light resistance and a water resistance are good.

However, a coloring matter and ink that satisfy all these characteristics have not yet been provided.
Especially, in ordinary aqueous ink, water-soluble dyes are used. Accordingly, when water is spilled on a recorded image, a dye is eluted, and a recorded image is blotted therewith or disappeared. Thus, it is much problematic in a water resistance. At present, various studies have been made upon focussing on the improvement of the water resistance.
For example, a method in which an organic solvent or a resin is added to ink using a pigment or an oil-soluble dye as a coloring matter or aqueous ink using a water-soluble dye has been studied. However, in case of using a pigment, there were problems that a dispersion stability was bad and a storage stability was poor, inducing clogging of a nozzle. In case of using an oil-soluble dye, an organic solvent was used, posing a problem of an environmental sanitation such as an odor, and ink blotting notably occurred, decreasing qualities of an image. Moreover, even in case of using ink containing additives, there were problems that a storage stability was poor, clogging of a nozzle occurred, and ink was not jetted well because a viscosity of ink was increased.
Recently, Japanese Patent Laid-Open No. 340835/1994 describes ink using an aqueous dispersion containing a polyester resin colored with a dye or a pigment as a disperse phase. However, a pigment still suffers from these problems. Since a dye is also poor in a compatibility with a resin, it also involves such problems that a precipitate appears in ink, a storage stability is poor and clogging of a nozzle occurs.
As stated above, the characteristics of ink used in the ink jet recording system in particular are greatly influenced by the characteristics intrinsic to the coloring matter. Thus, the discovery of a coloring matter that satisfies these conditions is quite important.
The invention aims to provide resin fine particles colored with a coloring matter which is excellent in water resistance, light resistance and compatibility with a resin in particular, an aqueous dispersion thereof, and ink for ink jet recording using the same, which is excellent in water resistance, light resistance and storage stability, and which is most suited for ink jet recording system.
The present inventors have assiduously conducted investigations to achieve this aim, and have found that a coloring matter represented by the following formula (1) meets the aim. This finding has led to the completion of the invention, as defined by the appended claims. Described herein are:

(1) A water-insoluble coloring matter represented by formula (1)

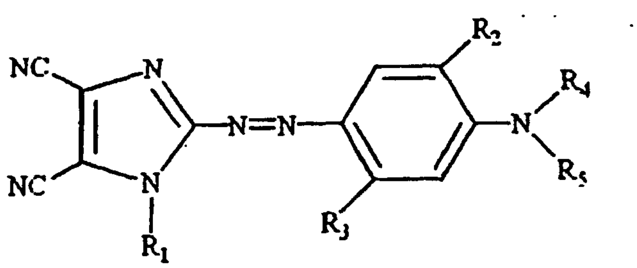

(1)

wherein

$R_1$ represents an alkyl group having a total carbon number of 4 or more, an aryl group, an aralkyl group or an alkenyl group,
$R_2$ represents a hydrogen atom, a halogen atom or an alkyl group,
$R_3$ represents an alkyl group, an alkoxy group, $-COOR_6$, $-CONR_7R_8$, $-NHSO_2R_9$ or $-NHCOR_{10}$ in which $R_6$ represents an alkyl group or an aryl group, $R_7$ and $R_8$, independently from each other, represent a hydrogen atom, an alkyl group or an aryl group, provided $R_7$ and $R_8$ are not hydrogen atoms at the same time, $R_9$ represents an alkyl group or an aryl group, and $R_{10}$ represents an alkyl group, an alkoxy group, an aryl group or an aryloxy group, and
$R_4$ and $R_5$, independently from each other, represent an alkyl group, an aryl group, an alkenyl group or an aralkyl group, and these groups may be substituted with an organic group.

(2) The coloring matter recited in (1), wherein in formula (1), at least one of $R_1$, $R_4$ and $R_5$ is an alkyl group having a total carbon number of 6 or more or an alkenyl group having a total carbon number of 6 or more, and these groups may be substituted with an organic group.
(3) Aqueous ink for ink jet recording which contains at least a water-insoluble coloring matter, water and a resin as main components and which takes the form of an emulsion, the coloring matter being at least one of compounds represented by formula (1)

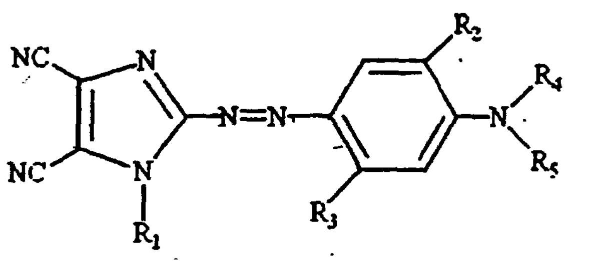

(1)

wherein

$R_1$ represents an alkyl group having a total carbon number of 4 or more, an aryl group, an aralkyl group or an alkenyl group,
$R_2$ represents a hydrogen atom, a halogen atom or an alkyl group,
$R_3$ represents an alkyl group, an alkoxy group, $-COOR_6$, $-CONR_7R_8$, $-NHSO_2R_9$ or $-NHCOR_{10}$ in which $R_6$ represents an alkyl group or an aryl group, $R_7$ and $R_8$, independently from each other, represent a hydrogen atom, an alkyl group or an aryl group, provided $R_7$ and $R_8$ are not hydrogen atoms at the same time, $R_9$ represents an alkyl group or an aryl group, and $R_{10}$ represents an alkyl group, an alkoxy group, an aryl group or an aryloxy group, and
$R_4$ and $R_5$, independently from each other, represent an alkyl group, an aryl group, an alkenyl group or an aralkyl group, and these groups may be substituted with an organic group.

(4) Resin fine particles colored with a coloring matter represented by formula (1)

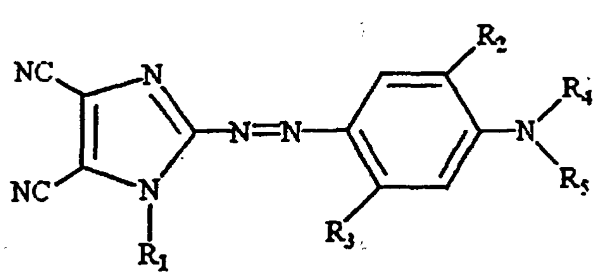

(1)

wherein

$R_1$ represents an alkyl group having a total carbon number of 4 or more, an aryl group, an aralkyl group or an

alkenyl group,

$R_2$ represents a hydrogen atom, a halogen atom or an alkyl group,

$R_3$ represents an alkyl group, an alkoxy group, $-COOR_6$, $-CONR_7R_8$, $-NHSO_2R_9$ or $-NHCOR_{10}$ in which $R_6$ represents an alkyl group or an aryl group, $R_7$ and $R_8$, independently from each other, represent a hydrogen atom, an alkyl group or an aryl group, provided $R_7$ and $R_8$ are not hydrogen atoms at the same time, $R_9$ represents an alkyl group or an aryl group, and $R_{10}$ represents an alkyl group, an alkoxy group, an aryl group or an aryloxy group, and

$R_4$ and $R_5$, independently from each other, represent an alkyl group, an aryl group, an alkenyl group or an aralkyl group, and these groups may be substituted with an organic group.

(5) A dispersion obtained by dispersing in an aqueous medium resin fine particles colored with a coloring matter represented by formula (1)

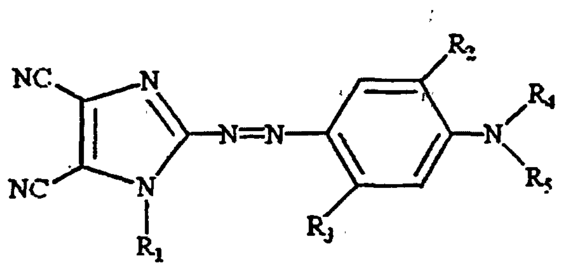

(1)

wherein

$R_1$ represents an alkyl group having a total carbon number of 4 or more, an aryl group, an aralkyl group or an alkenyl group,

$R_2$ represents a hydrogen atom, a halogen atom or an alkyl group,

$R_3$ represents an alkyl group, an alkoxy group, $-COOR_6$, $-CONR_7R_8$, $-NHSO_2R_9$ or $-NHCOR_{10}$ in which $R_6$ represents an alkyl group or an aryl group, $R_7$ and $R_8$, independently from each other, represent a hydrogen atom, an alkyl group or an aryl group, provided $R_7$ and $R_8$ are not hydrogen atoms at the same time, $R_9$ represents an alkyl group or an aryl group, and $R_{10}$ represents an alkyl group, an alkoxy group, an aryl group or an aryloxy group, and

$R_4$ and $R_5$, independently from each other, represent an alkyl group, an aryl group, an alkenyl group or an aralkyl group, and these groups may be substituted with an organic group.

The coloring matter for ink jet recording is excellent in water resistance in particular and also excellent in light resistance and compatibility with the resin. Thus, it is suited for ink jet. Further, the aqueous ink for ink jet recording of the invention which is produced using the coloring matter is excellent in light resistance and storage stability. Especially, when it is used as ink for ink jet recording system, the use of the ink composition can provide excellent aqueous ink that enables formation of a high-quality image without blotting and a recorded image having an excellent water resistance.

Preferred embodiments of the invention are described below by way of illustration only.

With respect to aqueous ink for ink jet recording which contains at least a water-insoluble coloring matter, water and a resin as main components and which takes the form of an emulsion, the invention provides resin fine particles colored with at least one coloring matter represented by formula (1), a dispersion obtained by dispersing the resin fine particles in an aqueous medium, and further aqueous ink for ink jet recording which is an emulsion obtained from the dispersion by emulsifying and dispersing the resin fine particles colored with at least one coloring matter represented by formula (1).

The coloring matter used in aqueous ink for ink jet recording of the invention is the coloring matter [hereinafter also referred to as a coloring matter for ink jet recording] represented by formula (1).

In formula (1), $R_1$ represents an optionally substituted alkyl group having a total carbon number of 4 or more, an optionally substituted aryl group, an optionally substituted aralkyl group or an optionally substituted alkenyl group; $R_2$ represents a hydrogen atom, a halogen atom or an optionally substituted alkyl group; $R_3$ represents an optionally substituted alkyl group, an optionally substituted alkoxy group, $-COOR_6$, $-CONR_7R_8$, $-NHSO_2R_9$ or $-NHCOR_{10}$ in which $R_6$ represents an optionally substituted alkyl group or an optionally substituted aryl group, $R_7$ and $R_8$, independently from each other, represent a hydrogen atom, an optionally substituted alkyl group or an optionally substituted aryl group, provided $R_7$ and $R_8$ are not hydrogen atoms at the same time, $R_9$ represents an optionally substituted alkyl

group or an optionally substituted aryl group, and $R_{10}$ represents an optionally substituted alkyl group, an optionally substituted alkoxy group, an optionally substituted aryl group or an optionally substituted aryloxy group; and $R_4$ and $R_5$, independently from each other, represent an optionally substituted alkyl group, an optionally substituted aryl group, an optionally substituted alkenyl group or an optionally substituted aralkyl group.

Since the coloring matter has to have a high compatibility with a resin or a solvent, a hydrophilic group is not desirable as a substituent.

Examples of the halogen atom include fluorine, chlorine, bromine and iodine atoms.

In the desirable coloring matter represented by formula (1), at least one of $R_1$, $R_4$ and $R_5$ is an alkyl group having a total carbon number of 6 or more or an alkenyl group having a total carbon number of 6 or more, and these groups may be substituted with an organic group. Preferably, at least one of $R_1$, $R_4$ and $R_5$ is an alkyl group having a total carbon number of 8 or more. Further, at least two of $R_1$, $R_4$ and $R_5$ are alkyl groups having a total carbon number of 6 or more or alkenyl groups having a total carbon number of 6 or more, and these groups may be substituted with an organic group. More preferably, at least two of $R_1$, $R_4$ and $R_5$ are alkyl groups having a total carbon number of 8 or more. Further preferably, all of $R_1$, $R_4$ and $R_5$ are alkyl groups having a total carbon number of 8 or more. Most preferably, $R_1$ is a linear or branched alkyl group having a total carbon number of 8 to 20 or an alkoxycarbonylalkyl group having a total carbon number of 6 to 20, $R_3$ is $-NHSO_2R_9$ having a total carbon number of 1 to 10 or $-NHCOR_{10}$ having a total carbon number of 2 to 10, and $R_4$ and $R_5$ are alkyl groups having a total carbon number of 8 to 20.

In formula (1), the optionally substituted alkyl group is not particularly limited. It is a linear, branched or cyclic alkyl group having a total carbon number of 1 to 20, or a linear, branched or cyclic alkyl group having a total carbon number of 1 to 20, which is substituted with a halogen atom, a cyano group, an alkoxy group, an alkoxycarbonyl group, an aryloxycarbonyl group, an alkylaminocarbonyl group or an alkylcarbonyloxy group.

Examples thereof include linear, branched or cyclic alkyl groups having a total carbon number of 1 to 20, such as methyl, ethyl, n-propyl, isopropyl, n-butyl, isobutyl, tert-butyl, sec-butyl, n-pentyl, isopentyl, tert-pentyl, sec-pentyl, cyclopentyl, n-hexyl, 1-methylpentyl, 2-methylpentyl, 3-methylpentyl, 4-methylpentyl, 1,1-dimethylbutyl, 1,2-dimethylbutyl, 1,3-dimethylbutyl, 2,3-dimethylbutyl, 1,1,2-trimethylpropyl, 1,2,2-trimethylpropyl, 1-ethylbutyl, 2-ethylbutyl, 1-ethyl-2-methylpropyl, cyclohexyl, methylcyclopentyl, n-heptyl, 1-methylhexyl, 2-methylhexyl, 3-methylhexyl, 4-methylhexyl, 5-methylhexyl, 1,1-dimethylpentyl, 1,2-dimethylpentyl, 1,3-dimethylpentyl, 1,4-dimethylpentyl, 2,2-dimethylpentyl, 2,3-dimethylpentyl, 2,4-dimethylpentyl, 3,3-dimethylpentyl, 3,4-dimethylpentyl, 1-ethylpentyl, 2-ethylpentyl, 3-ethylpentyl, 1,1,2-trimethylbutyl, 1,1,3-trimethylbutyl, 1,2,3-trimethylbutyl, 1,2,2-trimethylbutyl, 1,3,3-trimethylbutyl, 2,3,3-trimethylbutyl, 1-ethyl-1-methylbutyl, 1-ethyl-2-methylbutyl, 1-ethyl-3-methylbutyl, 2-ethyl-1-methylbutyl, 2-ethyl-3-methylbutyl, 1-n-propylbutyl, 1-isopropylbutyl, 1-isopropyl-2-methylpropyl, methylcyclohexyl, n-octyl, 1-methylheptyl, 2-methylheptyl, 3-methylheptyl, 4-methylheptyl, 5-methylheptyl, 6-methylheptyl, 1,1-dimethylhexyl, 1,2-dimethylhexyl, 1,3-dimethylhexyl, 1,4-dimethylhexyl, 1,5-dimethylhexyl, 2,2-dimethylhexyl, 2,3-dimethylhexyl, 2,4-dimethylhexyl, 2,5-dimethylhexyl, 3,3-dimethylhexyl, 3,4-dimethylhexyl, 3,5-dimethylhexyl, 4,4-dimethylhexyl, 4,5-dimethylhexyl, 1-ethylhexyl, 2-ethylhexyl, 3-ethylhexyl, 4-ethylhexyl, 1-n-propylpentyl, 2-n-propylpentyl, 1-isopropylpentyl, 2-isopropylpentyl, 1-ethyl-1-methylpentyl, 1-ethyl-2-methylpentyl, 1-ethyl-3-methylpentyl, 1-ethyl-4-methylpentyl, 2-ethyl-1-methylpentyl, 2-ethyl-2-methylpentyl, 2-ethyl-3-methylpentyl, 2-ethyl-4-methylpentyl, 3-ethyl-1-methylpentyl, 3-ethyl-2-methylpentyl, 3-ethyl-3-methylpentyl, 3-ethyl-4-methylpentyl, 1,1,2-trimethylpentyl, 1,1,3-trimethylpentyl, 1,1,4-trimethylpentyl, 1,2,2-trimethylpentyl, 1,2,3-trimethylpentyl, 1,2,4-trimethylpentyl, 1,3,4-trimethylpentyl, 2,2,3-trimethylpentyl, 2,2,4-trimethylpentyl, 2,3,4-trimethylpentyl, 1,3,3-trimethylpentyl, 2,3,3-trimethylpentyl, 3,3,4-trimethylpentyl, 1,4,4-trimethylpentyl, 2,4,4-trimethylpentyl, 3,4,4-trimethylpentyl, 1-n-butylbutyl, 1-isobutylbutyl, 1-sec-butylbutyl, 1-tert-butylbutyl, 2-tert-butylbutyl, 1-n-propyl-1-methylbutyl, 1-n-propyl-2-methylbutyl, 1-n-propyl-3-methylbutyl, 1-isopropyl-1-methylbutyl, 1-isopropyl-2-methylbutyl, 1-isopropyl-3-methylbutyl, 1,1-diethylbutyl, 1,2-diethylbutyl, 1-ethyl-1,2-dimethylbutyl, 1-ethyl-1,3-dimethylbutyl, 1-ethyl-2,3-dimethylbutyl, 2-ethyl-1,1-dimethylbutyl, 2-ethyl-1,2-dimethylbutyl, 2-ethyl-1,3-dimethylbutyl, 2-ethyl-2,3-dimethylbutyl, 1,2-dimethylcyclohexyl, 1,3-dimethylcyclohexyl, 1,4-dimethylcyclohexyl, ethylcyclohexyl, n-nonyl, 3,5,5-trimethylhexyl, n-decyl, n-undecyl, n-dodecyl, n-tridecyl, n-tetradecyl, n-pentadecyl, n-hexadecyl, n-heptadecyl, n-octadecyl, n-nonadecyl and n-eicosyl groups;

linear, branched or cyclic haloalkyl groups having a total carbon number of 1 to 20, such as fluoromethyl, trifluoromethyl, chloromethyl, dichloromethyl, trichloromethyl, bromomethyl, dibromomethyl, tribromomethyl, fluoroethyl, chloroethyl, bromoethyl, trifluoroethyl, pentafluoroethyl, tetrachloroethyl and hexafluoroisopropyl groups;

cyanoalkyl groups having a total carbon number of 2 to 10, such as cyanoethyl, cyanopropyl and cyanobutyl groups; alkoxyalkyl groups such as methoxymethyl, ethoxymethyl, methoxyethyl, ethoxyethyl, propoxyethyl and butoxyethyl groups;

linear or branched alkoxycarbonylalkyl groups having a total carbon number of 1 to 20, such as methoxycarbonylmethyl, ethoxycarbonylmethyl, propoxycarbonylmethyl, butoxycarbonylmethyl, pentyloxycarbonylmethyl, hexyloxycarbonylmethyl, heptyloxycarbonylmethyl, octyloxycarbonylmethyl, nonyloxycarbonylmethyl, decyloxycarbonylmethyl, methoxycarbonylethyl, ethoxycarbonylethyl, propoxycarbonylethyl, butoxycarbonylethyl, pentyloxycarbonylethyl, hexyloxycarbonylethyl, heptyloxycarbonylethyl, octyloxycarbonylethyl, nonyloxycarbonylethyl and decyloxycarbonylethyl

groups;

aryloxycarbonylalkyl groups having a total carbon number of 8 to 20, such as a phenoxycarbonylmethyl group;

linear or branched alkylaminocarbonylalkyl groups having a total carbon number of 3 to 20, such as methylaminocarbonylmethyl dimethylaminocarbonyimethyl, ethylaminocarbonylmethyl, diethylaminocarbonylmethyl, propylaminocarbonylmethyl, dipropylaminocarbonylmethyl, butylaminocarbonylmethyl, dibutylaminocarbonylmethyl, pentylaminocarbonylmethyl, dipentylaminocarbonylmethyl, hexylaminocarbonylmethyl, dihexylaminocarbonylmethyl, heptylaminocarbonylmethyl, diheptylaminocarbonylmethyl, octylaminocarbonylmethyl, dioctylaminocarbonylmethyl, nonylaminocarbonylmethyl, dinonylaminocarbonylmethyl, decylaminocarbonylmethyl, didecylaminocarbonylmethyl, methylaminocarbonylethyl, dimethylaminocarbonylethyl, ethylaminocarbonylethyl, diethylaminocarbonylethyl, propylaminocarbonylethyl, dipropylaminocarbonylethyl, butylaminocarbonylethyl, dibutylaminocarbonylethyl, pentylaminocarbonylethyl, dipentylaminocarbonylethyl, hexylaminocarbonylethyl, dihexylaminocarbonylethyl, heptylaminocarbonylethyl, diheptylaminocarbonylethyl, octylaminocarbonylethyl, dioctylaminocarbonylethyl, nonylaminocarbonylethyl, dinonylaminocarbonylethyl, decylaminocarbonylethyl and didecylaminocarbonylethyl groups;

linear or branced alkylcarbonyloxyalkyl groups having a total carbon number of 3 to 20, such as acetyloxyethyl, ethylcarbonyloxyethyl, propylcarbonyloxyethyl, butylcarbonyloxyethyl, pentylcarbonyloxyethyl, hexylcarbonyloxyethyl, heptylcarbonyloxyethyl, octylcarbonyloxyethyl, nonylcarbonyloxyethyl and decylcarbonyloxyethyl groups; and optionally substituted aralkyl groups having a total carbon number of 7 to 20, such as benzyl and phenetyl groups.

The optionally substituted alkoxy group is not particularly limited. It is a linear, branched or cyclic alkoxy group having a total carbon number of 1 to 20, or a linear, branched or cyclic alkoxy group having a total carbon number of 1 to 20, which is substituted with a halogen atom, an alkoxy group or an alkoxyalkoxy group.

Examples thereof include linear, branched or cyclic alkoxy groups having a total carbon number of 1 to 10, such as methoxy, ethoxy, propoxy, butoxy, pentoxy, 1-methylbutoxy, 2-methylbutoxy, 3-methylbutoxy, 1,1-dimethylbutoxy, 1,2-dimethylbutoxy, 2,2-dimethylbutoxy, 1-ethylpropoxy, 2-ethylpropoxy, hexyloxy, cyclohexyloxy, heptyloxy, methylcyclohexyloxy, octyloxy, ethylcyclohexyloxy, dimethylcyclohexyloxy, nonyloxy, 2-ethylhexyloxy, 3,5,5-trimethylhexyloxy and decyloxy groups;

linear, branched or cyclic haloalkoxy groups having a total carbon number of 1 to 20, such as fluoromethoxy, trifluoromethoxy, fluoroethoxy, trifluoroethoxy, hexafluoroethoxy, fluoropropoxy, trifluoropropoxy, hexafluoropropoxy, chloromethoxy, trichloromethoxy, chloroethoxy and trichloroethoxy groups;

and linear, branched or cyclic alkoxyalkoxy having a total carbon number of 2 to 20 and alkoxyalkoxyalkoxy groups having a total carbon number of 3 to 20, such as methoxymethoxy, ethoxymethoxy, propoxymethoxy, butoxymethoxy, cyclohexyloxymethoxy, methoxymethoxymethoxy, methoxyethoxy, ethoxyethoxy, propoxyethoxy, butoxyethoxy, cyclohexyloxyethoxy, methoxyethoxyethoxy, ethoxyethoxyethoxy, propoxyethoxyethoxy, butoxyethoxyethoxy, methoxymethylethoxy, ethoxymethylethoxy, propoxymethylethoxy, butoxymethylethoxy, cyclohexyloxymethylethoxy, methoxyethoxymethylethoxy, ethoxyethoxymethylethoxy, propoxyethoxymethylethoxy, butoxyethoxymethylethoxy, 2-[(2'-methoxy)propoxy]propoxy, methoxypropoxy, ethoxypropoxy and ethoxypropoxy groups.

The optionally substituted aryl group is not particularly limited. Examples thereof include phenyl, toluyl, xylidyl, naphthyl, chlorophenyl, bromophenyl, fluorophenyl and trifluoromethylphenyl groups.

The optionally substituted aryloxy group is not particularly limited. Examples thereof include phenoxy, methylphenoxy, dimethylphenoxy, methoxyphenoxy, chlorophenoxy, bromophenoxy, fluorophenoxy, trifluoromethylphenoxy and naphthyloxy groups.

The optionally substituted alkenyl group is not particularly limited. It is a linear or branched alkenyl group having a total carbon number of 3 to 20, or a linear or branched alkenyl group having a total carbon number of 3 to 20, which is substituted with a halogen atom or an alkoxy group. Examples thereof include alkenyl groups having a total carbon number of 3 to 20 and having one double bond in any position, such as propenyl, butenyl, pentenyl, hexenyl, heptenyl, octenyl, nonenyl, decenyl, undecenyl, dodecenyl, tridecenyl, tetradecenyl, pentadecenyl, hexadecenyl, heptadecenyl, octadecenyl, nonadecenyl and eicocenyl groups, and alkenyl groups having a total carbon number of 3 to 20 and having two or three double bonds in any positions.

With respect to the desirable coloring matter for ink jet recording, at least one of $R_1$, $R_4$ and $R_5$ is an alkyl group having a total carbon number of 6 or more or an alkenyl group having a total carbon number of 6 or more, and these groups may be substituted with an organic group. Preferably, at least one of $R_1$, $R_4$ and $R_5$ is an alkyl group having a total carbon number of 8 or more. Further, at least two of $R_1$, $R_4$ and $R_5$ are alkyl groups having a total carbon number of 6 or more or alkenyl groups having a total carbon number of 6 or more, and these groups may be substituted with an organic group. More preferably, at least two of $R_1$, $R_4$ and $R_5$ are alkyl groups having a total carbon number of 8 or more. Further preferably, all of $R_1$, $R_4$ and $R_5$ are alkyl groups having a total carbon number of 8 or more. Most preferably, $R_1$ is a linear or branched alkyl group having a total carbon number of 8 to 20 or an alkoxycarbonylalkyl group having a total carbon number of 6 to 20, $R_3$ is $-NHSO_2R_9$ having a total carbon number of 1 to 10 or $-NHCOR_{10}$ having a total carbon number of 2 to 10, and $R_4$ and $R_5$ are alkyl groups having a total carbon number of 8 to 20.

A substituent having a large number of hydrophilic groups is undesirable because the water resistance is

decreased. Specific examples of a magenta coloring matter represented by formula (1) are shown in Table 1. In the invention, however, the coloring matters shown in Table 1 are not critical.

Table 1

| Coloring matter No. | Structural formula | | | | |
|---|---|---|---|---|---|
| | $R_1$ | $R_2$ | $R_3$ | $R_4$ | $R_5$ |
| 1 | $C_5H_{11}$(i) | H | $NHCOC_2H_5$ | $C_2H_4OCOCH_3$ | $C_2H_4OCOCH_3$ |
| 2 | $C_4H_9$(n) | H | $CH_3$ | $C_2H_4OCOC_3H_7$(i) | $C_2H_4OCOC_3H_7$(i) |
| 3 | $C_4H_9$(n) | H | $CH_3$ | $C_2H_4CN$ | $C_2H_4CN$ |
| 4 | $C_4H_9$(i) | H | $NHCOC_2H_5$ | $C_2H_5$ | $C_2H_5$ |
| 5 | $C_4H_9$(i) | H | $NHSO_2C_2H_5$ | $C_2H_5$ | $C_2H_5$ |
| 6 | $CH_2CH(C_2H_5)C_4H_9$ | H | $NHCOC_2H_5$ | $C_2H_5$ | $C_2H_5$ |
| 7 | $C_8H_{17}$(n) | H | $NHCOC_2H_5$ | $C_2H_5$ | $C_2H_5$ |
| 8 | $CH_2CH(C_2H_5)C_4H_9$ | H | $CH_3$ | $C_2H_5$ | $C_2H_5$ |
| 9 | cyclohexyl group | H | $NHCOC_2H_5$ | $C_2H_5$ | $C_2H_5$ |
| 10 | $CH_2COOC_3H_7$(i) | H | $NHCOC_2H_5$ | $C_2H_5$ | $C_2H_5$ |
| 11 | $CH_2COOC_3H_7$(i) | H | $NHCOC_2H_5$ | $C_2H_4OCOCH_3$ | $C_2H_4OCOCH_3$ |
| 12 | $CH_2COOC_3H_7$(i) | H | $NHCOC_2H_5$ | $C_2H_4CN$ | $C_2H_4CN$ |
| 13 | $CH_2COOC_4H_9$ | H | $CH_3$ | $CH_2CH=CH_2$ | $CH_2CH=CH_2$ |
| 14 | $CH_2COOC_6H_{13}$ | H | $CH_3$ | $C_2H_4OCOC_3H_7$(i) | $C_2H_4OCOC_3H_7$(i) |
| 15 | $CH_2OCOC_2H_5$ | H | NHCOPh | $C_4H_9$ | $C_4H_9$ |
| 16 | $CH_2OCOC_3H_7$(i) | H | $NHSO_2CH_3$ | $C_2H_4OCOC_3H_7$(i) | $C_2H_4OCOC_3H_7$(i) |
| 17 | $C_2H_4OCOC_3H_7$(i) | H | $NHCOOC_2H_5$ | $C_2H_5$ | $C_2H_5$ |
| 18 | $CH_2CONHC_4H_9$ | H | $CH_3$ | $C_2H_4OCOCH_3$ | $C_2H_4OCOCH_3$ |
| 19 | $CH_2CON(C_4H_9)_2$ | H | $CH_3$ | $C_2H_5$ | $C_2H_5$ |
| 20 | $CH_2CH(C_2H_5)C_4H_9$ | H | $NHCOCH_3$ | $C_8H_{17}$(n) | $C_8H_{17}$(n) |
| 21 | $CH_2Ph$ | H | $CH_3$ | $CH_2Ph$ | $CH_2Ph$ |
| 22 | $C_{10}H_{21}$(n) | H | $NHCOCH_3$ | $C_8H_{17}$(n) | $C_8H_{17}$(n) |
| 23 | $C_4H_9$(i) | $OCH_3$ | $CH_3$ | $CH_2Ph$ | $CH_2CH=CH_2$ |
| 24 | $C_4H_9$(i) | Cl | $NHCOOC_2H_5$ | $C_4H_9$ | $C_4H_9$ |
| 25 | $CH_2CH(C_2H_5)C_4H_9$ | H | $NHCOCH_3$ | $C_2H_4OCOC_3H_7$(i) | $C_2H_4OCOC_3H_7$(i) |
| 26 | $CH_2CH(C_2H_5)C_4H_9$ | H | $CH_3$ | $C_3H_6OCOC_3H_7$ | $C_3H_6OCOC_3H_7$ |
| 27 | $C_4H_9$(i) | H | $CH_3$ | $C_3H_6OCOC_3H_7$ | $C_2H_5$ |
| 28 | $C_4H_9$(i) | H | $CH_3$ | $C_2H_4OCOCH_3$ | $C_2H_5$ |
| 29 | $CH_2COOC_4H_9$ | H | $CH_3$ | $C_2H_4COOC_2H_4OCH_3$ | $C_2H_5$ |
| 30 | $CH_2COOC_4H_9$ | H | $CH_3$ | $C_3H_6OCOC_3H_7$ | $C_2H_5$ |

Table 1 (continued)

| Coloring matter No. | Structural formula | | | | |
|---|---|---|---|---|---|
| | $R_1$ | $R_2$ | $R_3$ | $R_4$ | $R_5$ |
| 31 | $CH_2CH(C_2H_5)C_4H_9$ | H | $NHCOCH_3$ | $C_{10}H_{21}(n)$ | $C_{10}H_{21}(n)$ |
| 32 | $C_8H_{17}(n)$ | H | $NHCOCH_3$ | $C_8H_{17}(n)$ | $C_8H_{17}(n)$ |
| 33 | $C_{10}H_{21}(n)$ | H | $NHCOCH_3$ | $C_{10}H_{21}(n)$ | $C_{10}H_{21}(n)$ |
| 34 | $C_{12}H_{25}(n)$ | H | $NHCOCH_3$ | $C_8H_{17}(n)$ | $C_8H_{17}(n)$ |
| 35 | $CH_2COOC_4H_9(t)$ | H | $NHCOCH_3$ | $C_8H_{17}(n)$ | $C_8H_{17}(n)$ |
| 36 | $CH_2CH(C_2H_5)C_4H_9$ | H | $NHCOCH_3$ | $C_{10}H_{21}(i)$ | $C_{10}H_{21}(i)$ |
| 37 | $C_{12}H_{25}(n)$ | H | $NHCOCH_3$ | $C_{12}H_{25}(n)$ | $C_{12}H_{25}(n)$ |
| 38 | $C_{14}H_{29}(n)$ | H | $NHCOCH_3$ | $C_8H_{17}(n)$ | $C_8H_{17}(n)$ |
| 39 | $C_{16}H_{33}(n)$ | H | $NHCOCH_3$ | $C_8H_{17}(n)$ | $C_8H_{17}(n)$ |
| 40 | $C_{18}H_{37}(n)$ | H | $NHCOCH_3$ | $C_8H_{17}(n)$ | $C_8H_{17}(n)$ |
| 41 | $CH_2COOC_4H_9(t)$ | H | $NHCOCH_3$ | $C_{10}H_{21}(n)$ | $C_{10}H_{21}(n)$ |
| 42 | $C_{10}H_{21}(n)$ | H | $NHCOCH_3$ | $C_8H_{17}(n)$ | $C_8H_{17}(n)$ |
| 43 | $C_{12}H_{25}(n)$ | H | $NHSO_2C_2H_5$ | $C_8H_{17}(n)$ | $C_8H_{17}(n)$ |
| 44 | $CH_2COOCH_2CH(C_2H_5)C_4H_9$ | H | $NHCOCH_3$ | $C_8H_{17}(n)$ | $C_8H_{17}(n)$ |
| 45 | $C_2H_4COOC_6H_{13}$ | H | $NHCOCH_3$ | $C_8H_{17}(n)$ | $C_8H_{17}(n)$ |
| 46 | $(CH_2)_6CH=CH_2$ | H | $NHCOCH_3$ | $C_8H_{17}(n)$ | $C_8H_{17}(n)$ |
| 47 | $CH_2CH(C_2H_5)C_4H_9$ | H | $CH_3$ | $C_8H_{17}(n)$ | $C_8H_{17}(n)$ |
| 48 | cyclohexyl group | H | $NHCOCH_3$ | $C_{10}H_{21}(n)$ | $C_{10}H_{21}(n)$ |
| 49 | $C_8H_{17}(n)$ | H | $NHCOCH_3$ | $C_{10}H_{21}(n)$ | $C_{10}H_{21}(n)$ |
| 50 | $C_{10}H_{21}(n)$ | H | $NHCOCH_3$ | $C_{10}H_{21}(n)$ | $C_{10}H_{21}(n)$ |
| 51 | $CH_2CH(C_2H_5)C_4H_9$ | H | $NHCOCH_3$ | $(CH_2)_8CH=CH_2$ | $(CH_2)_8CH=CH_2$ |
| 52 | $(CH_2)_6CH=CH_2$ | H | $NHCOCH_3$ | $(CH_2)_6CH=CH_2$ | $(CH_2)_6CH=CH_2$ |
| 53 | $C_8H_{17}(n)$ | H | $NHCOCH_3$ | $(CH_2)_6CH=CH_2$ | $(CH_2)_6CH=CH_2$ |
| 54 | $CH_2COOC_4H_9(t)$ | H | $NHCOCH_3$ | $(CH_2)_6CH=CH_2$ | $(CH_2)_6CH=CH_2$ |
| 55 | $C_8H_{17}(n)$ | $CF_3$ | $NHCOCH_3$ | $C_8H_{17}(n)$ | $C_8H_{17}(n)$ |
| 56 | $CH_2CH(CH_3)CH_2CF_3$ | H | $NHCOCH_3$ | $C_8H_{17}(n)$ | $C_8H_{17}(n)$ |
| 57 | $CH_2COOC_6F_{13}(i)$ | H | $NHCOCH_3$ | $C_8H_{17}(n)$ | $C_8H_{17}(n)$ |
| 58 | $C_2H_4COOC_3F_7(i)$ | H | $NHCOCH_3$ | $C_8H_{17}(n)$ | $C_8H_{17}(n)$ |
| 59 | $CH_2CH(CH_3)CH_2CF_3$ | H | $NHCOCH_3$ | $C_8H_{17}(n)$ | $C_8H_{17}(n)$ |
| 60 | $C_2H_4C_4F_9$ | H | $NHCOCH_3$ | $C_8H_{17}(n)$ | $C_8H_{17}(n)$ |

The coloring matter represented by formula (1) which is used in ink for ink jet recording of the invention is produced by an ordinary azo coupling method, for example, by the coupling of aminoimidazoles (2) and anilines (3)

as schematically shown below.

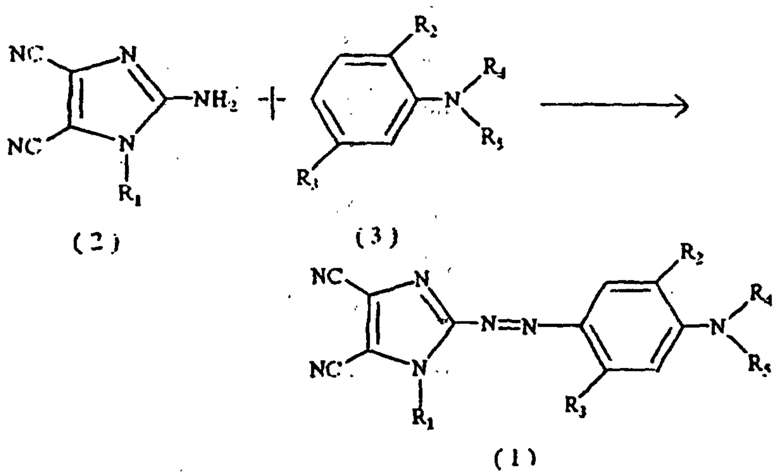

(2) (3)

(1)

wherein $R_1$ to $R_5$ are as defined above.

Specifically, the coloring matter is obtained by, for example, adding a sodium nitrite aqueous solution to aminoimidazoles (2) in hydrochloric acid for diazotization, then adding the diazo compound to anilines (3) for an azo coupling reaction, and separating the thus-obtained product through filtration. In reaction scheme (1), this method is not critical.

The coloring matter is useful in various inks, especially as a coloring matter for ink jet recording system. The coloring matter can be used as such. However, when it is used in the ink jet recording system in particular, it may be purified by desalting treatment, for example, with an ion exchange resin or through ultrafiltration, or by column chromatography in order to prevent clogging of a jet nozzle in a recording apparatus owing to impurities or inorganic materials contained in the coloring matter.

The ink for ink jet recording of the invention contains at least the coloring matter of formula (1), water and a resin as main components, namely, as essential components, and further other components, for example, additives such as a dispersant and an emulsifying agent and auxiliaries. It takes the form of an emulsion by dispersing the resin fine particles colored with the coloring matter of the invention in an aqueous medium and emulsifying the dispersion.

The ink for ink jet recording of the invention may contain an organic solvent and additives as required. The coloring matters represented by formula (1) may be used either singly or in combination, or may be mixed with other coloring matters having a different structure.

In the ink for ink jet recording of the invention, the resin constituting the resin fine particles can be a resin having an ionic group on the surface. For example, various resins such as a polyester resin, a vinyl polymer, a polyurethane resin, styrenic resin and a styrene-acrylic copolymer are available.

(a) The polyester resin comprises polycarboxylic acids and polyhydric alcohols. A resin obtained by the polymerization of one or more polycarboxylic acids and one or more polyhydric alcohols is mentioned.

Polycarboxylic acids are not particularly limited. Examples thereof include aromatic polycarboxylic acids, aromatic oxycarboxylic acids, aliphatic dicarboxylic acids and alicyclic dicarboxylic acids such as terephthalic acid, isophthalic acid, o-phthalic acid, 1,5-naphthalenedicarboxylic acid, 2,6-naphthalenedicarboxylic acid, diphenic acid, sulfoterephthalic acid, 5-sulfoisophthalic acid, 4-sulfophthalic acid, 4-sulphonaphthalene-2,7-dicarboxylic acid, 5[4-sulfophenoxy]isophthalic acid, sulphoterephtalic acid, p-oxybenzoic acid, p-(hydroxyethoxy)benzoic acid, succinic acid, adipic acid, azelaic acid, sebacic acid, dodecanedicarboxylic acid, fumaric acid, maleic acid, itaconic acid, hexahydrophthalic acid, tetrahydrophthalic acid, trimellitic acid, trimesic acid and pyromellitic acid. These can also be used as metal salts and ammonium salts.

The polyhydric alcohols are not particularly limited. Examples thereof include aliphatic polyhydric alcohols, alicyclic polyhydric alcohols and aromatic polyhydric alcohols such as ethylene glycol, propylene glycol, 1,3-propanediol, 2,3-butanediol, 1,4-butanediol, 1,5-pentanediol, 1,6-hexanediol, neopentyl glycol, diethylene glycol, dipropylene glycol, 2,2,4-trimethyl-1,3-pentanediol, polyethylene glycol, polypropylene glycol, polytetramethylene glycol, trimethylolethane, trimethylolpropane, glycerin, pentaerythritol, 1,4-cyclohexanediol, 1,4-cyclohexanedimethanol, spiroglycol, tricyclodecanediol, tricyclodecanedimethanol, m-xylene glycol, o-xylene glycol, 1,4-phenylene glycol, bisphenol A and lactone-type polyester polyols.

With respect to the polyester resin obtained by polymerizing one or more of the polycarboxylic acids and one

or more of the polyhydric alcohols, a resin in which a polar group in the end of the high-molecular chain is blocked with a known compound capable of blocking an end is also available.

(b) The vinyl polymer, the styrenic resin and the styrene-acrylic copolymer are not particularly limited. For example, those obtained from the following polymerizable monomers are mentioned.

Examples of the polymerizable monomers include vinyl aromatic hydrocarbons such as styrene, o-methylstyrene, m-methylstyrene, p-methylstyrene, α-methylstyrene, p-ethylstyrene, 2,4-dimethylstyrene, p-tert-butylstyrene, p-chlorostyrene and divinylbenzene; (meth)acrylic acid esters such as methyl acrylate, ethyl acrylate, butyl acrylate, n-propyl acrylate, isopropyl acrylate, n-butyl acrylate, isobutyl acrylate, tert-butyl acrylate, n-pentyl acrylate, isopentyl acrylate, neopentyl acrylate, 3-(methyl)butyl acrylate, 2-ethylhexyl acrylate, cyclohexyl acrylate, hexyl acrylate, octyl acrylate, nonyl acrylate, decyl acrylate, undecyl acrylate, dodecyl acrylate, phenyl acrylate, methyl methacrylate, n-propyl methacrylate, isopropyl methacrylate, n-butyl methacrylate, isobutyl methacrylate, tert-butyl methacrylate, n-pentyl methacrylate, isopentyl methacrylate, neopentyl methacrylate, 3-(methyl)butyl methacrylate, 2-ethylhexyl methacrylate, hexyl methacrylate, octyl methacrylate, nonyl methacrylate, decyl methacrylate, undecyl methacrylate and dodecyl methacrylate; unsaturated carboxylic acids such as acrylic acid, methacrylic acid, itaconic acid and maleic acid; (meth)acrylamide; n-substituted maleimide; maleic anhydride; (meth)acrylonitrile; vinyl ketone; vinyl acetate; and vinylidene chloride. Resins obtained by polymerizing one or more of these monomers are mentioned.

(c) The polyurethane resin comprises isocyanates and compounds with a functional group capable of reacting with isocyanates. A resin obtained by polymerizing one or more of the isocyanates and one or more of the compounds is mentioned.

Examples of the isocyanates include:

aliphatic polyisocyanates such as ethylene diisocyanate, trimethylene diisocyanate, tetramethylene diisocyanate, hexamethylene diisocyanate, octamethylene diisocyanate, nonamethylene diisocyanate, 2,2-dimethylpentane diisocyanate, 2,2,4-trimethylhexamethylene diisocyanate, decamethylene diisocyanate, butenediisocyanate, 1,3-butadiene-1,4-diisocyanate, 2,4,4-trimethylhexamethylene diisocyanate, 1,6,11-undecatriisocyanate, 1,3,6-hexamethylene triisocyanate, 1,8-diisocyanato-4-isocyanatomethyloctane, 2,5,7-trimethyl-1,8-diisocyanato-5-isocyanatomethyloctane, bis(isocyanatoethyl) carbonate, bis(isocyanatoethyl) ether, 1,4-butylene glycol dipropyl ether-ω,ω'-diisocyanate, lysine diisocyanatomethyl ester, lysine triisocyanate, 2-isocyanatoethyl-2,6-diisocyanatoethyl-2,6-diisocyanatohexanoate, 2-isocyanatopropyl-2,6-diisocyanatohexanoate, xylylene diisocyanate, bis(isocyanatoethyl)benzene, bis(isocyanatopropyl)benzene, α,α,α',α'-tetramethylxylylene diisocyanate, bis(isocyanatobutyl)benzene, bis(isocyanatomethyl)naphthalene, bis(isocyanatomethyl)diphenyl ether, bis(isocyanatoethyl) phthalate, mesitylene triisocyanate and 2,6-di(isocyanatomethyl)furan;
alicyclic polyisocyanates such as isophorone diisocyanate, bis(isocyanatomethyl)cyclohexane, dicyclohexylmethane diisocyanate, cyclohexane diisocyanate, methylcyclohexane diisocyanate, dicyclohexyldimethylmethane diisocyanate, 2,2-dimethyldicyclohexylmethane diisocyanate, bis(4-isocyanato-n-butylidene) pentaerythritol, dimer acid diisocyanate, 2-isocyanatomethyl-3-(3-isocyanatopropyl)-5-isocyanatomethylbicyclo[2,2,1]-heptane, 2-isocyanatomethyl-3-(3-isocyanatopropyl)-6-isocyanatomethylbicyclo[2,2,1]heptane, 2-isocyanatomethyl-2-(3-isocyanatopropyl)-5-isocyanatomethylbicyclo[2,2,1]heptane, 2-isocyanatomethyl-2-(3-isocyanatopropyl)-6-isocyanatomethylbicyclo[2,2,1]heptane, 2-isocyanatomethyl-3-(3-isocyanatopropyl)-6-(2-isocyanatoethyl)bicyclo[2,2,1]heptane, 2-isocyanatomethyl-3-(3-isocyanatopropyl)-6-(2-isocyanatoethyl)bicyclo[2,1,1]heptane, 2-isocyanatomethyl-2-(3-isocyanatopropyl)-5-(2-isocyanatoethyl)bicyclo[2,1,1]heptane, 2-isocyanatomethyl-2-(3-isocyanatopropyl)-6-(2-isocyanatoethyl)bicyclo[2,2,1]heptane and norbornanebis(isocyanatomethyl);
aromatic polyisocyanates such as phenylene diisocyanate, tolylene diisocyanate, ethylphenylene diisocyanate, isopropylenephenylene diisocyanate, dimethylphenylene diisocyanate, diethylphenylene diisocyanate, diisopropylphenylene diisocyanate, trimethylbenzene triisocyanate, benzene triisocyanate, naphthalene diisocyanate, methylnaphthalene diisocyanate, biphenyl diisocyanate, tolidine diisocyanate, 4,4'-diphenylmethane diisocyanate, 3,3'-dimethyldiphenylmethane-4,4'-diisocyanate, bibenzyl-4,4'-diisocyanate, bis(isocyanatophenyl)ethylene, 3,3'-dimethoxybiphenyl-4,4'-diisocyanate, triphenylmethane triisocyanate, polymeric MDI, naphthalene triisocyanate, diphenylmethane-2,4,4'-triisocyanate, 3-methyldiphenylmethane-4,6,4'-triisocyanate, 4-methyldiphenylmethane-3,5,2',4',6'-pentaisocyanate, phenylisocyanatomethyl isocyanate, phenylisocyanatoethylethyl isocyanate, tetrahydronaphthylene diisocyanate, hexahydrobenzene diisocyanate, hexahydrodiphenylmethane-4,4'-diisocyanate, diphenyl ether diisocyanate, ethylene glycol diphenyl ether diisocyanate, 1,3-propylene glycol diphenyl ether diisocyanate, benzophenone diisocyanate, diethylene glycol diphenyl ether diisocyanate, dibenzofuran diisocyanate, carbazole diisocyanate, ethylcarbazole diisocyanate and dichlorocarbazole diisocyanate;
sulfur-containing aliphatic isocyanates such as thiodiethyl diisocyanate, thiopropyl diisocyanate, thiodihexyl diisocyanate, dimethylsulfone diisocyanate, dithiodimethyl diisocyanate, dithiodiethyl diisocyanate, dithiopropyl diisocyanate and dicyclohexylsulfide-4,4'-diisocyanate;

aromatic sulfide-type isocyanates such as diphenylsulfide-2,4'-diisocyanate, diphenylsulfide-4,4'-diisocyanate, 3,3'-dimethoxy-4,4'-diisocyanatodibenzyl thioether, bis(4-isocyanatomethylbenzene) sulfide and 4,4'-methoxybenzenethioethyleneglycol-3,3'-diisocyanate;

aromatic disulfide-type isocyanates such as diphenyldisulfide-4,4'-diisocyanate, 2,2'-dimethyldiphenyldisulfide-5,5'-diisocyanate, 3,3'-dimethyldiphenyldisulfide-5,5'-diisocyanate, 3,3'-dimethyldiphenyldisulfide-6,6'-diisocyanate, 4,4'-dimethyldiphenyldisulfide-5,5'-diisocyanate, 3,3'-dimethoxydiphenyldisulfide-4,4'-diisocyanate and 4,4'-dimethoxydiphenyldisulfide-3,3'-diisocyanate;

aromatic sulfone-type isocyanates such as diphenylsulfone-4,4'-diisocyanate, diphenylsulfone-3,3'-diisocyanate, benzidinesulfone-4,4'-diisocyanate, diphenylmethanesulfone-4,4'-diisocyanate, 4-methyldiphenylinethanesulfone-2,4'-diisocyanate, 4,4'-dimethoxydiphenylsulfone-3,3'-diisocyanate, 3,3'-dimethoxy-4,4'-diisocyanatodibenzylsulfone, 4,4'-dimethyldiphenylsulfone-3,3'-diisocyanate, 4,4'-di-tert-butyldiphenylsulfone-3,3'-diisocyanate, 4,4'-methoxybenzeneethylenedisulfone-3,3'-diisocyanate and 4,4'-dichlorodiphenylsulfone-3,3'-diisocyanate;

sulfonic acid ester-type isocyanates such as 4-methyl-3-isocyanatobenzenesulfonyl-4'-isocyanatophenol ester and 4-methoxy-3-isocyanatobenzenesulfonyl-4'-isocyanatophenol ester;

aromatic sulfonic acid amides such as 4-methyl-4'-isocyanate, dibenzenesulfonylethylenediamine-4,4'-diisocyanate, 4,4'-methoxybenzenesulfonylethylenediamine-3,3'-diisocyanate and 4-methyl-3-isocyanatobenzenesulfonylanilide-4-methyl-3'-isocyanate; and

sulfur-containing heterocyclic compounds such as thiophene-2,5-diisocyanate, thiophene-2,5-diisocyanatomethyl, 1,4-dithian-2,5-diisocyanate and 1,4-dithian-2,5-diisocyanatomethyl.

Examples of the compounds with a functional group capable of reacting with the isocyanates include:

polyol compounds: aliphatic polyols such as ethylene glycol, diethylene glycol, triethylene glycol, tetraethylene glycol, propylene glycol, dipropylene glycol, butylene glycol, neopentyl glycol, glycerin, trimethylolethane, trimethylolpropane, butanetriol, 1,2-methylglycoside, pentaerythritol, dipentaerythritol, tripentaerythritol, sorbitol, erythritol, threitol, ribitol, arabinitol, xylitol, allitol, mannitol, dolucitol, iditol, glycol, inositol, hexanetriol, triglycerol, diglycerol, polyethylene glycol, polypropylene glycol, polytetraethylene ether glycol, tris(2-hydroxyethyl) isocyanurate, cyclobutanediol, cyclopentanediol, cyclohexanediol, cycloheptanediol, cyclooctanediol, cyclohexanedimethanol, hydroxypropylcyclohexanol, tricyclo[5,2,1,0,$^{2,6}$]decanedimethanol, bicyclo[4,3,0]nonanediol, dicyclohexanediol, tricyclo[5,3,1,1]dodecanediol, bicyclo[4,3,0]nonanedimethanol, tricyclo[5,3,1,1]dodecane-ethanol, hydroxypropyltricyclo[5,3,1,1]dodecanol, spiro[3,4]octanediol, 1,1'-bicyclohexylidenediol, cyclohexanetriol, maltitol and lactitol;

aromatic polyols such as dihydroxynaphthalene, trihydroxynaphthalene, tetrahydroxynaphthalene, dihydroxybenzene, benzenetriol, biphenyltetraol, pyrogallol, (hydroxynaphthyl)pyrogallol, trihydroxyphenanthrene, bisphenol A, bisphenol F, xylylene glycol, di(2-hydroxyethoxy)benzene, bisphenol A-bis(2-hydroxyethyl ether), tetrabromobisphenol A, tetrabromobisphenol A-bis(2-hydroxyethyl ether) and bisphenol S;

halogenated polyols such as dibromoneopentyl glycol, polyester polyols, polycaprolactones, polythioether polyols, polyacetal polyols, polycarbonate polyols, polycaprolactone polyols, polythioether polyols, polybutadiene polyols, furandimethanol, condensation reaction products of organic acids such as oxalic acid, glutamic acid, adipic acid, acetic acid, phthalic acid, isophthalic acid, salicylic acid and pyromellitic acid and the polyols, addition reaction products of the polyols and alkylene oxides such as ethylene oxide and propylene oxide, addition reaction products of alkylene polyamines and alkylene oxides, 2,2-dimethylollactic acid, 2,2-dimethylolpropionic acid, 2,2-dimethylolbutanoic acid, 2,2-dimethylolvaleric acid, 3,4-diaminobutanesulfonic acid, 3,6-diamino-2-toluenesulfonic acid and their caprolactone modified products;

2-mercaptoethanol, 3-mercapto-1,2-propanediol, glycerin di(mercaptoacetate), 1-hydroxy-4-mercaptocyclohexane, 2,4-dimercaptophenol, 2-mercaptohydroquinone, 4-mercaptophenol, 1,3-dimercapto-2-propanol, 2,3-dimercapto-1,3-butanediol, pentaerythritol tris(3-mercaptopropionate), pentaerythritol mono(3-mercaptopropionate), pentaerythritol tris(thioglycolate), pentaerythritol pentakis(3-mercaptopropionate), hydroxymethyltris(mercaptoethylthiomethyl)methane, 1-hydroxyethylthio-3-mercaptoethylthiobenzene, 4-hydroxy-4'-mercaptodiphenylsulfone, 2-(2-mercaptoethylthio)ethanol, dihydroxyethylsulfide mono(3-mercaptopropionate), dimercaptoethane mono(salicylate) and hydroxyethylthiomethyltris(mercaptoethylthio)methane.

Further, polyamino compounds such as ethylenediamine, diethylenetriamine, triethylenetetramine, propylenediamine, butylenediamine, hexamethylenediamine, cyclohexylenediamine, piperazine, 2-methylpiperazine, phenylenediamine, tolylenediamine, xylylenediamine, $\alpha,\alpha'$-methylenebis(2-chloroaniline)-3,3'-dichloro-$\alpha,\alpha'$-biphenylamine, m-xylenediamine, isophoronediamine, N-methyl-3,3'-diaminopropylamine and norbornenediamine, polythiol compounds, $\alpha$-amino acids such as serine, lysine and histidine, and halo-substituted products of these active hydrogen

compounds can also be used. These may be used either singly or in combination.

These resins can also be used either singly or in combination, but they are not critical at all.

The resin containing the ionic group on the surface exhibits the excellent water dispersibility.

Examples of the ionic group include a sulfonic acid group a carboxylic acid group, a sulfuric acid group, a phosphoric acid group, a phosphonic acid group, a phosphinic acid group, alkali metal salt groups or ammonium salt groups thereof, and primary to tertiary amine groups. A carboxylic acid alkali metal salt group, a carboxylic acid ammonium salt group, a sulfonic acid alkali metal salt group and a sulfonic acid ammonium salt group are preferable. A sulfonic acid alkali metal salt group and a sulfonic acid ammonium salt group are especially preferable in view of the water dispersion stability. The introduction of the ionic group can be conducted by adding a monomer having an ionic group in the formation of the resin.

For example, when a carboxylic acid alkali metal salt group or a carboxylic acid ammonium salt group is introduced into a polyester resin as an ionic group, a method can be employed in which a polycarboxylic acid such as trimellitic acid is introduced into a system at the terminal stage of the polymerization of a polyester to add a carboxyl group to an end of a resin, and this group is further neutralized with ammonia or sodium hydroxide to convert the same into a carboxylic acid salt group.

Moreover, when a sulfonic acid alkali metal salt group or a sulfonic acid ammonium salt group is introduced into polyester resin fine particles as an ionic group, a mono- or di-carboxylic acid having a sulfonic acid alkali metal salt group or a sulfonic acid ammonium salt group can be introduced into a system to introduce this ionic group into the polyester resin.

As the salt, an ammonium ion, Li, Na, K, Mg, Ca, Cu and Fe are mentioned. K and Na are especially preferable.

The invention includes the resin fine particles colored with the coloring matter represented by formula (1), the dispersion obtained by dispersing the resin fine particles in the aqueous medium, and the ink for ink jet recording which is the emulsion resulting from the emulsification through the dispersion.

The resin fine particles colored with the coloring matter of the invention can be produced by the following methods.

1. Method in which the coloring matter is dissolved or dispersed in the polymerizable monomer, and emulsion polymerization is then conducted.
2. Method in which after a resin is obtained by polymerization of the polymerizable monomer, the coloring matter is directly added thereto, and additives are further added as required to uniformly dissolve or disperse the same for coloration.
3. Method in which a material obtained by dissolving or dispersing the coloring matter in a water-soluble organic solvent (for example, acetone, methyl ethyl ketone, tetrahydrofuran or dioxane) or an ordinary film-forming aid (such as texanol or N,N-dimethylpyrrolidone) is added to the resin obtained by the polymerization, additives are added as required, and these are uniformly dissolved or dispersed for coloration.
4. Method in which a material obtained by dissolving or dispersing the coloring matter in a water-insoluble organic solvent (for example, toluene) is added to the resin obtained by the polymerization, additives are added as required, these are uniformly dissolved or dispersed, water is further added to form a water dispersion and conduct emulsification, and the water-insoluble organic solvent is then distilled off as required for coloration.
5. Method in which after obtaining the water dispersion of the resin, coloration is conducted by a high-temperature dying method in which the coloring matter for ink jet recording is added thereto and the mixture is treated at a high temperature.

With respect to the resin fine particles colored with the coloring matter which are produced by these methods, the particle diameter is not particularly limited. In the dispersion obtained by dispersing the same in an aqueous medium using a dispersing agent, the smaller particle diameter is preferred. When the particles are used as the dispersion of the coloring matter for ink jet recording, the average particle diameter is between 0.01 and 1 µm, preferably between 0.05 and 0.8 µm. Further, the production of the dispersion obtained by dispersing the resin fine particles colored with the coloring matter in the aqueous medium is not particularly limited. A dispersion having a desired composition can be obtained using a dispersing agent selected according to the application of the dispersion.

In the colored resin fine particles, the coloring matter is influenced by the compatibility of the coloring matter with the resin, and it includes a coloring matter which is uniformly dissolved in the resin and a coloring matter which is partially uniformly dispersed in or adhered to the surface of the resin. A coloring matter which is uniformly dissolved in the resin is preferable. The amount of the coloring matter relative to the resin is usually between 1 and 90% by weight, preferably between 5 and 50% by weight. However, it is not particularly limited.

The colored resin fine particles or the dispersion thereof can be used as various coloring and recording materials upon making the most of the hydrophobic nature thereof. Further, the ink for ink jet recording can be produced as an emulsion by emulsifying the same.

The ink for ink jet recording of the invention is an emulsion in which the coloring matter represented by formula (1), the resin and water are used as essential components, and it can be produced by the following methods.

1. Method in which after the coloring matter for ink jet recording is dissolved or dispersed in the polymerizable monomer, the emulsion polymerization is conducted, additives are added thereto as required, these are uniformly dissolved or dispersed, and water is further added to form a water dispersion and conduct emulsification.
2. Method in which after a resin is obtained by polymerization, the coloring matter for ink jet recording is directly added thereto, additives are added as required to uniformly dissolve or disperse the same, and water is further added to form a water dispersion and conduct emulsification.
3. Method in which a material obtained by dissolving or dispersing the coloring matter for ink jet recording in a water-soluble organic solvent (for example, acetone, methyl ethyl ketone, tetrahydrofuran or dioxane) or an ordinary film-forming aid (such as texanol or N,N-dimethylpyrrolidone) is added to the resin obtained by the polymerization, additives are added thereto as required, these are uniformly dissolved or dispersed, water is further added to form a water dispersion and conduct emulsification, and the water-soluble organic solvent is then distilled off as required.
4. Method in which a material obtained by dissolving or dispersing the coloring matter for ink jet recording in a water-insoluble organic solvent (for example, toluene) is added to the resin obtained by the polymerization, additives are added thereto as required, these are uniformly dissolved or dispersed, water is further added to form a water dispersion and conduct emulsification, and the water-insoluble organic solvent is then distilled off as required.
5. Method in which after obtaining the water dispersion of the resin, the resin is colored by a high-temperature dying method in which the coloring matter for ink jet recording is added thereto and the mixture is treated at a high temperature, and the water dispersion of the colored resin fine particles is emulsified.

In the production, filtration with a microporous filter such as a membrane filter is sometimes conducted to remove insoluble matters.

With respect to the colored resin fine particles in the water dispersion obtained by emulsification (the resin fine particles colored with the coloring matter is sometimes simply referred to as colored resin fine particles), the average particle diameter is between 0.01 and 1 μm, more preferably between 0.05 and 0.8 μm. When the average particle diameter is too small, there is a possibility of decreasing the image density or the water resistance. When it is too large, there is a possibility that the dispersion stability in ink is decreased to form a precipitate, decreasing the storage stability, or that clogging of a nozzle occurs.

The amount of the coloring matter in the colored resin fine particles depends on the use, the aim, the type of the coloring matter, the ink composition, the printing density of the ink and the clogging property. The amount of the coloring matter in the resin is between 1 and 90% by weight, preferably between 5 and 50% by weight.

When the amount of the coloring matter is small, a large amount of ink is required to obtain a satisfactory recorded image, exerting a load on a printing head of a recording device or recording paper. When it is large, the coloring matter tends to be precipitated from the resin particles to form a precipitate in the ink, inducing the clogging of the printing head.

The ink for ink jet recording of the invention may contain, for adjusting the color tone of the ink, other coloring matters, and known dyes or pigments treated in the form of an emulsion or a fine dispersion so as not to impair ink characteristics.

The amounts of the colored resin fine particles in the ink are between 1 and 70% by weight, preferably between 5 and 50% by weight.

The ink of the invention can contain a water-soluble organic solvent, as required, for adjusting the wettability, the surface tension, the viscosity and the drying rate of the ink.

Examples of the water-soluble organic solvent include polyhydric alcohols such as ethylene glycol, diethylene glycol, triethylene glycol, polyethylene glycol, propylene glycol, polypropylene glycol, 1,3-propanediol, glycerin and thioglycol; polyhydric alcohol ethers such as ethylene glycol monoethyl ether, ethylene glycol monobutyl ether, diethylene glycol monobutyl ether, dipropylene glycol monoethyl ether and triethylene glycol monomethyl ether; ketones such as acetone and methyl ethyl ketone; amides such as N,N-dimethylformamide, N,N-diethylformamide and N,N-dimethylacetamide; nitrogen-containing compounds such as 2-pyrrolidone, N-methyl-2-pyrrolidone, N-vinyl-2-pyrrolidone and 1,3-dimethyl-2-imidazolidinone; ethers such as tetrahydrofuran and dioxane; alcohols such as methanol, ethanol, 1-propanol, 2-propanol, 1-butanol and 2-butanol; and glycerin. When the water-soluble organic solvent is used, it is advisable that the amount thereof is between 1 and 20% by weight based on the total amount of the ink.

In order to improve the storage stability of the ink, it is advisable to adjust a pH to between 7 and 10. Examples of a pH adjustor include $NaHCO_3$, $Na_2B_4O_7$, alkanolamines such as ethanolamine, diethanolamine and triethanolamine, and alkali metal hydroxides such as potassium hydroxide and lithium hydroxide.

The ink of the invention can contain, as required, various additives used so far. Examples of the additives

include an ultraviolet absorber, an antioxidant, a dispersing agent, a dispersion stabilizer, a chelating agent, a water-soluble polymer, a masking agent, a rustproofing agent, an antiseptic, a viscosity modifier, a surfactant, a surface-tension modifier, a pH adjustor, a specific resistance modifier, a near infrared absorber and a penetrant.

The ink of the invention comprising the components can be used as the ink for ink jet recording system and also as ink for writing or marking instrument. It is excellent in the recording characteristics, the storage stability, the fixability to the recording medium, the vividness of the recorded image, the light resistance and the water resistance.

Since the coloring matter used in the invention has the high solubility in the organic solvent, it can also be used in solvent-type jet ink for textile printing or printing.

EXAMPLES

The invention is illustrated more specifically by referring to the following Examples. However, the invention is not limited thereto. Incidentally, "parts" in Examples are on the weight basis.

COLORING MATTER PRODUCTION EXAMPLE 1

Coloring matter No. 31 in Table 1 was produced by the following process.

2-Amino-4,5-dicyanoimidazole (5.3 parts) was added to 106 parts of water and 15 parts of 35% hydrochloric acid, and the solution was cooled to 10°C or less. Subsequently, a solution comprising 3 parts of sodium nitrite and 7 parts of water was added thereto dropwise at 10°C or less, and the mixture was stirred for 2 hours. Sulfamic acid (2.4 parts) was added thereto to form a diazo solution. Separately, 17 parts of a compound represented by the following formula (a) were added to 45 parts of methanol, and the mixture was cooled to 10°C. To this mixture was added the diazo solution, and the resulting solution was stirred for 2 hours. After the completion of the reaction, the reaction solution was adjusted to a weak acidity with an NaOH aqueous solution. The precipitate was filtered, washed, and dried to obtain 21.9 parts of a compound (b). Then, 20 parts of the resulting compound (b), 5.2 parts of potassium carbonate and 0.6 part of KI were added to 60 parts of N,N-dimethyl-2-imidazolidinone (abbreviated as DMI), and the mixture was heated to 80°C. To this was added dropwise 44 parts of 2-ethylhexyl bromide, and the mixture was heated to 120°C, and stirred for 2 hours. The reaction mixture was cooled to room temperature, and discharged in 150 parts of ice water. The resulting mixture was extracted with toluene, and subjected to column purification to obtain 15 parts of coloring matter No. 31.

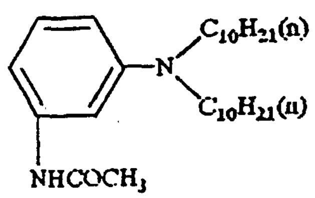

(a)

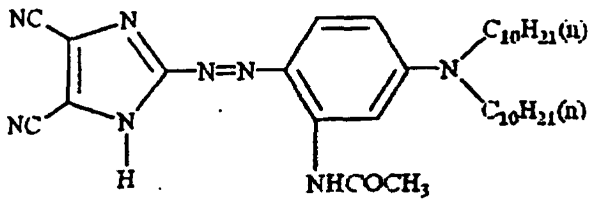

(b)

The spectral characteristics and the elemental analysis values of the compound in toluene are shown below. Further, the compound was dissolved in toluene at a ratio of 40% or more, showing a high solubility.

Maximum absorption wavelength (λmax) = 520 nm

Gram absorptibity coefficient = 8.0 x $10^4$ ml/g·cm

| Elemental analysis ($C_{41}H_{66}N_8O$) | | | |
|---|---|---|---|
| | C | H | N |
| calculated (%) | 71.68 | 9.68 | 16.31 |
| found (%) | 71.51 | 9.78 | 16.34 |

COLORING MATTER PRODUCTION EXAMPLE 2

Coloring matter No. 41 in Table 1 was produced by the following process.

Twenty parts of the compound (b), 5.2 parts of potassium carbonate and 0.6 part of KI were added to 60 parts of DMI, and the mixture was heated to 60°C. To this was added dropwise 30 parts of tert-butyl chloroacetate, and the mixture was heated at 60°C, and stirred for 1 hour. The reaction mixture was cooled to room temperature, and discharged in 150 parts of ice water. The resulting mixture was extracted with toluene, and subjected to column purification to obtain 14 parts of coloring matter No. 41.

The spectral characteristics and the elemental analysis values of the compound in toluene are shown below. Further, the compound was dissolved in toluene at a ratio of 40% or more, showing a high solubility.

Maximum absorption wavelength (λmax) = 525 nm
Gram absorptibity coefficient = $7.5 \times 10^4$ ml/g·cm

| Elemental analysis ($C_{39}H_{60}N_8O_3$) | | | |
|---|---|---|---|
| | C | H | N |
| calculated (%) | 67.99 | 8.78 | 16.26 |
| found (%) | 67.91 | 8.71 | 16.38 |

EXAMPLE 1

Production example of colored resin fine particles and a dispersion (A) thereof

An autoclave fitted with a thermometer and a stirrer was charged with 180 parts of dimethyl terephthalate, 10 parts of pentasodium sulfoisophthalic acid dimethyl ester, 130 parts of ethylene glycol, 25 parts of tricyclodecanedimethanol and 0.1 part of tetrabutoxytitanate, and the mixture was heated at 180 to 220°C for approximately 3 hours for transesterification. Subsequently, the reaction mixture was heated to 240°C, the pressure in the autoclave was then lowered slowly to 10 mmHg, and the reaction was continued for 1 hour. The pressure in the autoclave was returned to atmospheric pressure to obtain a copolyester resin.

Then, 100 parts of the resulting polyester resin, 150 parts of methyl ethyl ketone, 150 parts of tetrahydrofuran and 10 parts of the coloring matter for ink jet recording indicated at No. 1 in Table 1 were mixed. Thereafter, 600 parts of deionized water was added thereto, and these were further mixed. This mixture was filtered through a 0.8-micron membrane filter, and heated to distill off the solvent. After cooling, deionized water was added to adjust the solid content to 20% by weight. Thus, a dispersion (A) of colored resin fine particles was obtained. The resin fine particles dispersed in the dispersion were fine particles of the resin colored in magenta tint, having an average particle diameter of 0.2 µm.

Evaluation of characteristics:

Glycerin and deionized water were added to the dispersion of the colored resin fine particles to obtain aqueous ink having a solid content of 15% by weight.

This aqueous ink was charged into an ink cartridge for a piezo-type ink jet printer, and printing and image recording were conducted with this printer. The tests were conducted with respect to the following items. The results are shown in Table 2.

The evaluation standards of the test items are described below.

(A) Evaluation of an emulsion:

The condition of the emulsion in production of the emulsion ink was visually evaluated.

Evaluation standard:

| | |
|---|---|
| The condition of the emulsion is good. | ◎ |
| A floating matter is slightly observed, which is not actually problematic though. | ○ |
| Gelation is slightly observed, which seems likely to be problematic. | Δ |
| The condition of the emulsion is bad, and it is problematic as ink. | × |

(B) Evaluation of an image:

An image was formed on plain paper, and a blotted condition was visually evaluated.

Evaluation standard:

| | |
|---|---|
| No blotting is observed. | ◎ |
| Blotting is observed without any influence on an image. | ○ |
| Blotting is notably observed. | × |

(C) Evaluation of an image recording density:

The plain paper having the recorded image was measured for the recording density (OD value) using a reflection densitometer (manufactured by Macbeth) to evaluate the image recording density.

Evaluation standard:

| | |
|---|---|
| The OD value is 1.1 or more. | ◎ |
| The OD value is 1.0 to less than 1.1. | ○ |
| The OD value is 0.8 to less than 1.0 | Δ |
| The OD value is less than 0.8. | × |

(D) Evaluation of a water resistance:

With respect to the printed portion of the plain paper having the recorded image for test, the printing density (OD value) before dipping in water or after dipping in water and air-drying was measured with a reflection densitometer. The water resistance was evaluated upon comparing $OD_1$.

$$OD_1 = \text{(OD value after dipping in water and air-drying)/}$$

$$\text{(OD value before dipping in water)} \times 100$$

Evaluation standard:

| | |
|---|---|
| $OD_1$ is 90 to 100%. | ◎ ◎ |
| $OD_1$ is 80 to less than 90%. | ◎ |
| $OD_1$ is 70 to less than 80%. | ○ |
| $OD_1$ is 50 to less than 70%. | Δ |
| $OD_1$ is less than 50%. | × |

(E) Evaluation of a light resistance:

A printing density (OD value) before irradiation or after 100 hours of irradiation was measured using a xenon fadeometer (manufactured by Suga Shikenki), and the light resistance was evaluated upon comparing $OD_2$.

$$OD_2 = (\text{OD value after irradiation}) / (\text{OD value before irradiation}) \times 100$$

Evaluation standard:

| | |
|---|---|
| $OD_2$ is 90 to 100%. | ◎◎ |
| $OD_2$ is 80 to less than 90%. | ◎ |
| $OD_2$ is 70 to less than 80%. | ○ |
| $OD_2$ is 50 to less than 70%. | Δ |
| $OD_2$ is less than 50%. | × |

(F) Evaluation of a storage stability of ink:

In order to evaluate the initial storage stability of aqueous ink (storage at 40° for 1 month) and the long-term storage stability thereof (storage at 40°C for 3 months), the conditions of the aqueous ink after these storages were visually observed. Further, the recording was conducted continuously with the printer for a long period of time, and the clogging was observed.

(F-1) Conditions after storage of the ink:

Evaluation standard:

| | |
|---|---|
| No problem without any precipitate or any floating matter. | ○ |
| A floating matter is slightly observed. | Δ |
| Problematic with a precipitate and a floating matter observed. | × |

(F-2) Clogging:

| | |
|---|---|
| Normal | ○ |
| Negligible level at the present stage | Δ |
| Abnormal | × |

EXAMPLE 2

Production example of a dispersion (B) of colored resin fine particles

An autoclave fitted with a thermometer and a stirrer was charged with 150 parts of dimethyl terephthalate, 50 parts of dimethyl isophthalate, 5 parts of pentasodium sulfoisophthalic acid dimethyl ester, 150 parts of ethylene glycol, 250 parts of neopentyl glycol and 0.1 part of tetrabutoxytitanate, and the mixture was heated at 180 to 220°C for approximately 3 hours for transesterification. Subsequently, the reaction mixture was heated to 240°C, the pressure in the autoclave was then lowered slowly to 10 mmHg, and the reaction was continued for 1 hour. The pressure in the autoclave was returned to atmospheric pressure to obtain a copolyester resin. Then, 100 parts of the resulting polyester resin, 150 parts of methyl ethyl ketone, 150 parts of tetrahydrofuran and 10 parts of the coloring matter for ink jet

recording indicated at No. 2 in Table 1 were mixed. Thereafter, 600 parts of deionized water was added thereto, and these were further mixed. This mixture was filtered through a 0.8-micron membrane filter, and heated to distill off the solvent. After cooling, deionized water was added to adjust the solid content to 20% by weight. Thus, a dispersion (B) of colored resin fine particles was obtained. The resin fine particles dispersed in the dispersion were fine particles of the resin colored in magenta tint, having an average particle diameter of 0.3 μm.

Glycerin and deionized water were added to the dispersion of the colored resin fine particles to obtain aqueous ink having a solid content of 15% by weight. The ink characteristics were evaluated as in Example 1, and the results are shown in Table 2.

EXAMPLES 3 to 20

Ink was produced by the process of Example 1 or 2 using the coloring matters for ink jet recording shown in Table 1, and the ink characteristics were evaluated. The results are shown in Table 2. Incidentally, "Ink production process" in Table 2 refers to the process of Example 1 or 2.

All the aqueous inks using the coloring matters for ink jet recording of the invention were especially excellent in the water resistance and also excellent in the long-term storage stability. Further, the recorded image was good without blotting, and excellent in the light resistance.

EXAMPLE 21

Production example of a dispersion (C) of colored resin fine particles

A reaction vessel fitted with a thermometer, a stirrer, a reflux condenser, a dropping unit and a nitrogen introduction tube was charged with 900 parts of deionized water, and fully purged with nitrogen. After the reaction vessel was heated to 70°C, 2 parts of potassium persulfate was charged therein. Subsequently, a mixture comprising 53 parts of styrene, 59 parts of butyl acrylate, 48 parts of glycidyl methacrylate and 0.16 part of tert-dodecylmercaptan was gradually added dropwise to 70 parts of deionized water of the dropping unit and 1.0 part of sodium laurylsulfate in the reaction vessel over 2 hours. After the completion of the dropwise addition, the mixture was aged for 2 hours. Then, an aqueous solution comprising 2 parts of ammonium persulfate and 20 parts of deionized water was added to the reaction vessel. A mixture comprising 298 parts of styrene, 297 parts of butyl acrylate, 29 parts of methacrylic acid, 10 parts of ethylene glycol dimethacrylate and 0.65 part of tert-dodecylmercaptan was added dropwise to 300 parts of deionized water of the dropping unit, 2 parts of sodium laurylsulfate and 16 parts of acrylamide in the reaction vessel over 3 hours. After the completion of the dropwise addition, the mixture was aged for 3 hours. After the mixture was cooled to room temperature, deionized water and aqueous ammonia were charged to obtain an aqueous acrylic resin.

One hundred parts of the resulting aqueous acrylic resin, 150 parts of methyl ethyl ketone, 150 parts of tetrahydrofuran and 10 parts of the coloring matter for ink jet recording indicated at No. 1 in Table 1 were mixed. Then, 600 parts of deionized water were added thereto, and these were further mixed. This mixture was filtered through a 0.8-micron membrane filter, and heated to distill off the solvent. After cooling, deionized water was added to adjust the solid content to 20% by weight. Thus, a dispersion (C) of colored resin fine particles was obtained. The resin fine particles dispersed in the dispersion were fine particles of the resin colored in magenta tint, having an average particle diameter of 0.1 μm.

Glycerin and deionized water were added to the dispersion of the colored resin fine particles to obtain aqueous ink having a solid content of 15% by weight. The ink characteristics were evaluated as in Example 1, and the results are shown in Table 2.

EXAMPLES 22 to 37

Inks were produced by the process of Example 1, 2 or 21 using the coloring matters for ink jet recording shown in Table 1, and the ink characteristics were evaluated. The results are shown in Table 2. Incidentally, "Ink production process" in Table 2 refers to the process of Example 1, 2 or 21.

All the aqueous inks using the coloring matters for ink jet recording of the invention were especially excellent in the water resistance and also excellent in the long-term storage stability. Further, the recorded image was good without blotting, and excellent in the light resistance.

Next, in order to evaluate the characteristics of the coloring matter at a high concentration, high-density ink was produced by increasing the addition amount of the coloring matter, and then evaluated.

EXAMPLE 38

Production example of a dispersion (D) of colored resin fine particles

One hundred parts of the polyester resin obtained in Example 1, 150 parts of methyl ethyl ketone, 150 parts of tetrahydrofuran and 40 parts of the coloring matter for ink jet recording indicated at No. 1 in Table 1 were mixed. Further, 600 parts of deionized water was added thereto, and they were further mixed. Since the coloring matter exceeded the solubility in solvent, this was not completely dissolved, and partially remained. This mixture was filtered through a 0.8-micron membrane filter, and heated to distill off the solvent. After cooling, deionized water was added to adjust the solid content to 20% by weight. Thus, a dispersion of colored resin fine particles was obtained. The resin fine particles dispersed in the dispersion were fine particles of the resin colored in magenta tint, having an average particle diameter of 0.3 μm. Glycerin and deionized water were added to the dispersion of the colored resin fine particles to obtain aqueous ink having a solid content of 15% by weight. The ink characteristics were evaluated as in Example 1, and the results are shown in Table 2.

EXAMPLE 39

Production example of a dispersion (E) of colored resin fine particles

One hundred parts of the polyester resin obtained in Example 2, 150 parts of methyl ethyl ketone, 150 parts of tetrahydrofuran and 40 parts of the coloring matter for ink jet recording indicated at No. 31 in Table 1 were mixed. Further, 600 parts of deionized water were added thereto, and they were further mixed. The coloring matter was completely dissolved because of the high solubility in the solvent. This mixture was filtered through a 0.8-micron membrane filter, and heated to distill off the solvent. After cooling, deionized water was added to adjust the solid content to 20% by weight. Thus, a dispersion of colored resin fine particles was obtained. The resin fine particles dispersed in the dispersion were fine particles of the resin colored in magenta tint, having an average particle diameter of 0.1 μm. Glycerin and deionized water were added to the dispersion of the colored resin fine particles to obtain aqueous ink having a solid content of 15% by weight. The ink characteristics were evaluated as in Example 1, and the results are shown in Table 2.

EXAMPLE 40

Production example of a dispersion (F) of colored resin fine particles

One hundred parts of the acrylic resin obtained in Example 21, 150 parts of methyl ethyl ketone, 150 parts of tetrahydrofuran and 40 parts of the coloring matter for ink jet recording indicated at No. 31 in Table 1 were mixed. Further, 600 parts of deionized water were added thereto, and they were further mixed. The coloring matter was completely dissolved because of the high solubility in the solvent. The mixture was filtered through a 0.8-micron membrane filter, and heated to distill off the solvent. After cooling, deionized water was added to adjust the solid content to 20% by weight. Thus, a dispersion (F) of colored resin fine particles was obtained. The resin fine particles dispersed in the dispersion were fine particles of the resin colored in magenta tint, having an average particle diameter of 0.1 μm.

Glycerin and deionized water were added to the dispersion of the colored resin fine particles to obtain aqueous ink having a solid content of 15% by weight. The ink characteristics were evaluated as in Example 1, and the results are shown in Table 2.

EXAMPLES 41 to 50

Inks were produced by the process of Example 38, 39 or 40 using the coloring matters for ink jet recording shown in Table 1, and the ink characteristics were evaluated. The results are shown in Table 2. Incidentally, "Ink production process" in Table 2 refers to the process of Example 38, 39 or 40.

The coloring matter of the invention exhibits the high compatibility with the resin and the solvent. The higher the compatibility, the ink that gives the recorded image having the higher density can be produced. With respect to the increase in the concentration of the coloring matter in ink, the aqueous ink using the coloring matter for ink jet recording of the invention, especially the aqueous ink using the coloring matter having plural substituents with the large carbon number had the high solubility of the coloring matter in the resin or the solvent. Accordingly, it was easy to add the large amount of the coloring matter, and gelation or formation of a precipitate was scarcely observed in the emulsification step. Thus, the ink was excellent. Further, the recorded image was good without blotting, and excellent in the water resistance and the light resistance in particular.

COMPARATIVE EXAMPLE 1

Ink was produced as in Example 1 using C. I. Disperse Red 90 (Z1 in Table 2). Since the solubility of the coloring matter was low, an insoluble matter was observed. The ink was passed through the filter to remove the insoluble matter, and the characteristics thereof were then evaluated as in Example 1. Consequently, as shown in Table 2, the coloring matter was quite worse than the coloring matters for ink jet recording of the invention.

COMPARATIVE EXAMPLE 2

Ink was produced as in Example 1 using the following coloring matter Z2. Since the solubility of the coloring matter was low, an insoluble matter was observed. The ink was passed through the filter to remove the insoluble matter, and the characteristics thereof were then evaluated as in Example 1.

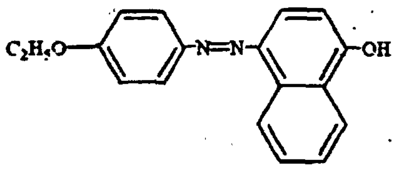

Z2

Consequently, as shown in Table 2, the coloring matter was quite worse than the coloring matters for ink jet recording of the invention.

COMPARATIVE EXAMPLE 3

Ink was produced as in Example 1 using the following coloring matter Z3. Since the coloring matter was water-soluble, it was completely dissolved. The ink was passed through the filter to remove the insoluble matter, and the characteristics thereof were then evaluated as in Example 1.

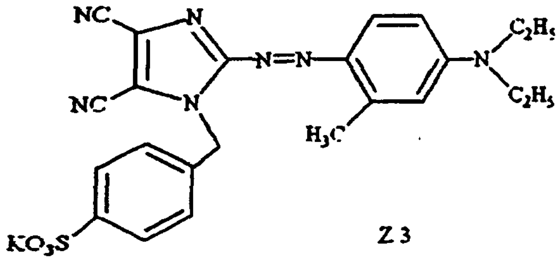

Z3

Consequently, as shown in Table 2, the coloring matter was quite worse than the coloring matters for ink jet recording of the invention.

COMPARATIVE EXAMPLE 4

Ink was produced as in Example 1 using the following coloring matter Z4. Since the solubility of the coloring matter was low, an insoluble matter was observed. The ink was passed through the filter to remove the insoluble matter, and the characteristics thereof were then evaluated as in Example 1.

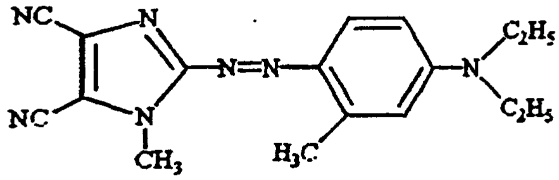

Z 4

Consequently, as shown in Table 2, the coloring matter was quite worse than the coloring matters for ink jet recording of the invention.

Table 2

| Example | Coloring. Ex | Ink production process | Evaluation of characteristics | | | | | | | | |
|---|---|---|---|---|---|---|---|---|---|---|---|
| | | | A | B | C | D | E | F-1(after 1 month) | F-1(after 3 month) | F-2(after 1 month) | F-2(after 3 month) |
| 1 | 1 | Ex.1 | ○ | ◎ | △ | ◎ | ◎ | ○ | △ | ○ | △ |
| 2 | 2 | Ex.2 | ○ | ◎ | △ | ◎ | ◎ | ○ | △ | ○ | △ |
| 3 | 3 | Ex.1 | △ | ◎ | △ | ◎ | ◎ | ○ | △ | ○ | △ |
| 4 | 4 | ↑ | △ | ◎ | △ | ◎ | ◎ | ○ | △ | ○ | △ |
| 5 | 7 | ↑ | ○ | ◎ | △ | ◎ | ◎ | ○ | △ | ○ | △ |
| 6 | 10 | ↑ | △ | ◎ | △ | ◎ | ◎ | ○ | △ | ○ | △ |
| 7 | 11 | ↑ | △ | ◎ | △ | ◎ | ◎ | ○ | △ | ○ | △ |
| 8 | 14 | ↑ | ○ | ◎ | △ | ◎ | ◎ | ○ | ○ | ○ | △ |
| 9 | 15 | ↑ | △ | ◎ | △ | ◎ | ◎ | ○ | △ | ○ | △ |
| 10 | 16 | ↑ | ○ | ◎ | △ | ◎ | ◎ | ○ | ○ | ○ | △ |
| 11 | 18 | ↑ | ○ | ◎ | △ | ◎ | ◎ | ○ | △ | ○ | △ |
| 12 | 23 | ↑ | △ | ◎ | △ | ◎ | ◎ | ○ | △ | ○ | △ |
| 13 | 25 | ↑ | ○ | ◎ | △ | ◎ | ◎◎ | ○ | ○ | ○ | ○ |
| 14 | 5 | Ex.2 | △ | ◎ | △ | ◎ | ◎ | ○ | ○ | ○ | ○ |
| 15 | 6 | ↑ | ○ | ◎ | △ | ◎ | ◎ | ○ | △ | ○ | △ |
| 16 | 8 | ↑ | ○ | ◎ | △ | ◎ | ◎ | ○ | △ | ○ | △ |
| 17 | 9 | ↑ | ○ | ◎ | △ | ◎ | ◎ | ○ | △ | ○ | △ |
| 18 | 13 | ↑ | ○ | ◎ | △ | ◎ | ◎ | ○ | × | ○ | × |
| 19 | 19 | ↑ | ○ | ◎ | △ | ◎ | ◎ | ○ | △ | ○ | △ |

| | | | | | | | | | | | |
|---|---|---|---|---|---|---|---|---|---|---|---|
| 20 | 30 | ← | ○ | ◎ | △ | ◎ | ◎ | ○ | △ | ○ | △ |
| 21 | 1 | Ex.21 | △ | ◎ | △ | ◎ | ◎ | ○ | △ | ○ | △ |
| 22 | 25 | ← | ○ | ◎ | △ | ◎ | ◎◎ | ○ | ○ | ○ | ○ |
| 23 | 26 | ← | ○ | ◎ | △ | ◎ | ◎ | ○ | △ | ○ | △ |
| 24 | 31 | ← | ◎ | ◎ | △ | ◎◎ | ◎◎ | ○ | ○ | ○ | ○ |
| 25 | 35 | Ex.1 | ◎ | ◎ | △ | ◎◎ | ◎ | ○ | ○ | ○ | ○ |
| 26 | 37 | ← | ◎ | ◎ | △ | ◎◎ | ◎◎ | ○ | ○ | ○ | ○ |
| 27 | 41 | ← | ◎ | ◎ | △ | ◎◎ | ◎◎ | ○ | ○ | ○ | ○ |
| 28 | 43 | ← | ◎ | ◎ | △ | ◎◎ | ◎◎ | ○ | ○ | ○ | ○ |
| 29 | 44 | ← | ◎ | ◎ | △ | ◎◎ | ◎ | ○ | ○ | ○ | ○ |
| 30 | 46 | ← | ◎ | ◎ | △ | ◎◎ | ◎ | ○ | ○ | ○ | ○ |
| 31 | 47 | ← | ◎ | ◎ | △ | ◎ | ◎ | ○ | ○ | ○ | ○ |
| 32 | 52 | Ex.2 | ◎ | ◎ | △ | ◎ | ◎ | ○ | ○ | ○ | ○ |
| 33 | 54 | ← | ◎ | ◎ | △ | ◎ | ◎ | ○ | ○ | ○ | ○ |
| 34 | 56 | ← | ◎ | ◎ | △ | ◎◎ | ◎◎ | ○ | ○ | ○ | ○ |
| 35 | 58 | ← | ◎ | ◎ | △ | ◎◎ | ◎◎ | ○ | ○ | ○ | ○ |
| 36 | 20 | Ex.21 | ◎ | ◎ | △ | ◎◎ | ◎ | ○ | ○ | ○ | ○ |
| 37 | 32 | ← | ◎ | ◎ | △ | ◎◎ | ◎◎ | ○ | ○ | ○ | ○ |
| 38 | 1 | Ex.38 | △ | ◎ | △ | ◎ | ◎ | ○ | × | ○ | × |
| 39 | 31 | Ex.39 | ◎ | ◎ | ◎ | ◎◎ | ◎◎ | ○ | ○ | ○ | ○ |
| 40 | 31 | Ex.40 | ◎ | ◎ | ◎ | ◎◎ | ◎◎ | ○ | ○ | ○ | ○ |
| 41 | 20 | ← | ◎ | ◎ | ◎ | ◎◎ | ◎◎ | ○ | ○ | ○ | ○ |
| 42 | 35 | ← | ◎ | ◎ | ◎ | ◎◎ | ◎◎ | ○ | ○ | ○ | ○ |
| 43 | 43 | Ex.38 | ◎ | ◎ | ◎ | ◎◎ | ◎◎ | ○ | ○ | ○ | ○ |
| 44 | 44 | ← | ◎ | ◎ | ◎ | ◎◎ | ◎◎ | ○ | ○ | ○ | ○ |

| | | | | | | | | | | | |
|---|---|---|---|---|---|---|---|---|---|---|---|
| 45 | 51 | Ex.40 | ◎ | ◎ | ○ | ◎◎ | ◎◎ | ○ | ○ | ○ | ○ |
| 46 | 54 | ← | ◎ | ◎ | ○ | ◎◎ | ◎◎ | ○ | ○ | ○ | ○ |
| 47 | 56 | ← | ◎ | ◎ | ◎ | ◎◎ | ◎◎ | ○ | ○ | ○ | ○ |
| 48 | 55 | Ex.39 | ◎ | ◎ | ◎ | ◎◎ | ◎◎ | ○ | ○ | ○ | ○ |
| 49 | 58 | ← | ◎ | ◎ | ◎ | ◎◎ | ◎◎ | ○ | ○ | ○ | ○ |
| 50 | 60 | ← | ◎ | ◎ | ○ | ◎◎ | ◎◎ | ○ | ○ | ○ | ○ |
| Comp.1 | Z1 | Ex.1 | △ | △ | × | ○ | △ | △ | × | △ | × |
| Comp.2 | Z2 | ← | △ | △ | × | ○ | △ | △ | × | △ | × |
| Comp.3 | Z3 | ← | △ | × | △ | × | △ | ○ | ○ | △ | △ |
| Comp.4 | Z4 | ← | △ | △ | △ | ○ | ○ | △ | × | △ | × |

## Claims

1. Resin fine particles with an average particle diameter between 0.01 and 1 μm colored with a coloring matter represented by formula (1):

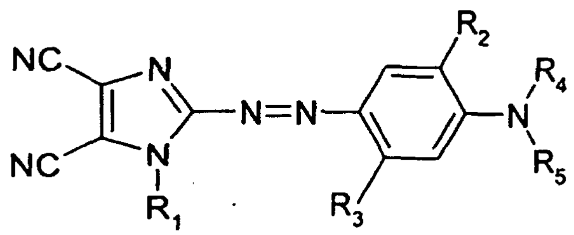

(1)

wherein:

$R_1$ represents:

an alkyl group having a total carbon number of 4 or more,
an aryl group,
an aralkyl group, or
an alkenyl group;

$R_2$ represents:

a hydrogen atom,
a halogen atom, or
an alkyl group;

$R_3$ represents:

an alkyl group,
an alkoxy group,
$-COOR_6$,
$-CONR_7R_8$,
$-NHSO_2R_9$, or
$-NHCOR_{10}$

in which:

$R_6$ represents:

an alkyl group, or
an aryl group,

$R_7$ and $R_8$, independently from each other, represent:

a hydrogen atom,
an alkyl group, or
an aryl group,
provided $R_7$ and $R_8$ are not hydrogen atoms at the same time,

$R_9$ represents:

an alkyl group, or
an aryl group, and

$R_{10}$ represents:

an alkyl group,
an alkoxy group,
an aryl group, or
an aryloxy group; and

$R_4$ and $R_5$, independently from each other, represent:

an alkyl group,
an aryl group,
an alkenyl group, or
an aralkyl group;

and these groups may be substituted with an organic group.

**2.** Resin fine particles according to claim 1, wherein at least one of $R_1$, $R_4$ and $R_5$ is an alkyl group having a total carbon number of 6 or more or an alkenyl group having a total carbon number of 6 or more, and these groups may be substituted with an organic group.

**3.** Resin fine particles according to claim 1, wherein at least one of $R_1$, $R_4$ and $R_5$ is an alkyl group having a total carbon number of 8 or more.

**4.** Resin fine particles according to claim 1, wherein at least two of $R_1$, $R_4$ and $R_5$ are alkyl groups having a total carbon number of 6 or more, or alkenyl groups having a total carbon number of 6 or more, and these groups may be substituted with an organic group.

**5.** Resin fine particles according to claim 1, wherein at least two of $R_1$, $R_4$ and $R_5$ are alkyl groups having a total carbon number of 8 or more.

**6.** Resin fine particles according to claim 1, wherein all of $R_1$, $R_4$ and $R_5$ are alkyl groups having a total carbon number of 8 or more.

**7.** Resin fine particles according to claim 1, wherein:

$R_1$ is a linear or branched alkyl group having a total carbon number of 8 to 20, or an alkoxycarbonylalkyl group having a total carbon number of 6 to 20;
$R_3$ is $-NHSO_2R_9$ having a total carbon number of 1 to 10 or $-NHCOR_{10}$ having a total carbon number of 2 to 10; and
$R_4$ and $R_5$ are alkyl groups having a total carbon number of 8 to 20.

**8.** Resin fine particles according to any one of claims 1 to 7 with an average particle diameter between 0.05 and 0.8 µm.

**9.** A dispersion obtained by dispersing in an aqueous medium resin fine particles according to any one of claims 1 to 8.

**10.** Aqueous ink for ink jet recording which is an emulsion obtained by emulsifying a dispersion according to claim 9.

## Patentansprüche

**1.** Harz-Feinteilchen mit einem mittleren Teilchendurchmesser zwischen 0,01 und 1 µm, gefärbt mit einem Färbemittel der Formel (1):

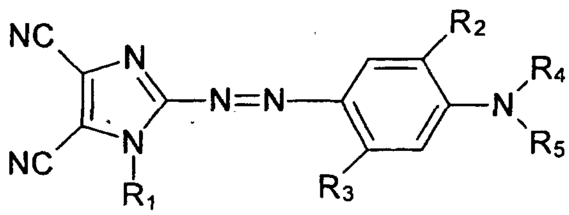

(1)

worin:

$R_1$ für eine Alkylgruppe mit insgesamt 4 oder mehr Kohlenstoffatomen, eine Arylgruppe, eine Aralkylgruppe oder eine Alkenylgruppe steht;
$R_2$ für ein Wasserstoffatom, ein Halogenatom oder eine Alkylgruppe steht;
$R_3$ für eine Alkylgruppe, eine Alkoxygruppe, $-COOR_6$, $-CONR_7R_8$, $-NHSO_2R_9$ oder $-NHCOR_{10}$ steht;

worin:

$R_6$ für eine Alkylgruppe oder eine Arylgruppe steht;
$R_7$ und $R_8$ unabhängig voneinander für ein Wasserstoffatom, eine Alkylgruppe oder eine Arylgruppe stehen,

vorausgesetzt, dass $R_7$ und $R_8$ nicht gleichzeitig Wasserstoffatome sind,

$R_9$ für eine Alkylgruppe oder eine Arylgruppe steht und
$R_{10}$ für eine Alkylgruppe, eine Alkoxygruppe, eine Arylgruppe oder eine Aryloxygruppe steht; und
$R_4$ und $R_5$ unabhängig voneinander für eine Alkylgruppe, eine Arylgruppe, eine Alkenylgruppe oder eine Aralkylgruppe stehen

und diese Gruppen gegebenenfalls mit einer organischen Gruppe substituiert sind.

2. Harz-Feinteilchen nach Anspruch 1, worin zumindest einer von $R_1$, $R_4$ und $R_5$ eine Alkylgruppe mit insgesamt 6 oder mehr Kohlenstoffatomen oder eine Alkenylgruppe mit insgesamt 6 oder mehr Kohlenstoffatomen ist und diese Gruppen gegebenenfalls mit einer organischen Gruppe substituiert sind.

3. Harz-Feinteilchen nach Anspruch 1, worin zumindest einer von $R_1$, $R_4$ und $R_5$ eine Alkylgruppe mit insgesamt 8 oder mehr Kohlenstoffatomen ist.

4. Harz-Feinteilchen nach Anspruch 1, worin zumindest zwei von $R_1$, $R_4$ und $R_5$ Alkylgruppen mit insgesamt 6 oder mehr Kohlenstoffatomen oder Alkenylgruppen mit insgesamt 6 oder mehr Kohlenstoffatomen sind und diese Gruppen gegebenenfalls mit einer organischen Gruppe substituiert sind.

5. Harz-Feinteilchen nach Anspruch 1, worin zumindest zwei von $R_1$, $R_4$ und $R_5$ Alkylgruppen mit insgesamt 8 oder mehr Kohlenstoffatomen sind.

6. Harz-Feinteilchen nach Anspruch 1, worin $R_1$, $R_4$ und $R_5$ allesamt Alkylgruppen mit insgesamt 8 oder mehr Kohlenstoffatomen sind.

7. Harz-Feinteilchen nach Anspruch 1, worin.
$R_1$ eine lineare oder verzweigte Alkylgruppe mit insgesamt 8 bis 20 Kohlenstoffatomen oder eine Alkoxycarbonylalkylgruppe mit insgesamt 6 bis 20 Kohlenstoffatomen ist;
$R_3$ $-NHSO_2R_9$ mit insgesamt 1 bis 10 Kohlenstoffatomen oder $-NHCOR_{10}$ mit insgesamt 2 bis 10 Kohlenstoffatomen ist; und
$R_4$ und $R_5$ Alkylgruppen mit insgesamt 8 bis 20 Kohlenstoffatomen sind.

8. Harz-Feinteilchen nach einem der Ansprüche 1 bis 7 mit einem mittleren Teilchendurchmesser zwischen 0,05 und 0,8 μm.

9. Dispersion, die durch Dispergieren von Harz-Feinteilchen nach einem der Ansprüche 1 bis 8 in einem wässrigen Medium erhältlich ist.

10. Wässrige Druckfarbe zum Tintenstrahldrucken, die eine durch Emulgieren einer Dispersion nach Anspruch 9 erhaltene Emulsion ist.

**Revendications**

1. Particules fines de résine avec un diamètre moyen de particule compris entre 0,001 et 1 μm colorées d'une matière colorante représentée par la formule (1):

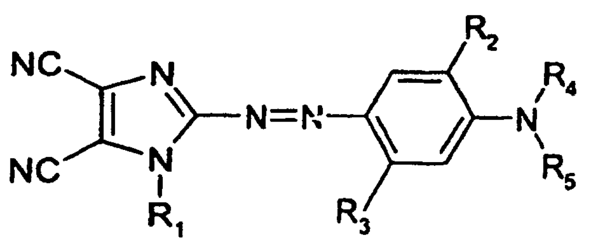

(1)

où

$R_1$ représente:

un groupe alkyle ayant un nombre total de carbone de 4 ou plus,
un groupe aryle
un groupe aralkyle, ou
un groupe alcényle;

$R_2$ représente:

un atome d'hydrogène,
un atome d'halogène, ou
un groupe alkyle;

$R_3$ représente:

un groupe alkyle,

un groupe alcoxy,
$-COOR_6$,
$-CONR_7R_8$,
$-NHSO_2R_9$, ou
$-NHCOR_{10}$

où

$R_6$ représente:

un groupe alkyle ou
un groupe aryle,

$R_7$ et $R_8$, indépendamment l'un de l'autre, représentent

un atome d'hydrogène,
un groupe alkyle, ou
un groupe aryle,
à condition que $R_7$ et $R_8$ ne soient pas des atomes d'hydrogène en même temps,

$R_9$ représente:

un groupe alkyle, ou
un groupe aryle, et

$R_{10}$ représente:

un groupe alkyle,
un groupe alcoxy,
un groupe aryle,
un groupe aryloxy; et

$R_4$ et $R_5$, indépendamment l'un de l'autre, représentent:

un groupe alkyle,
un groupe aryle,
un groupe alcényle, ou
un groupe aralkyle;

et ces groupes peuvent être substitués par un groupe organique.

2. Particules fines de résine selon la revendication 1, où au moins l'un de $R_1$, $R_4$ et $R_5$ est un groupe alkyle ayant un nombre total de carbone de 6 ou plus, ou un group e alcényle ayant un nombre total de carbone de 6 ou plus, et ces groupes peuvent être substitués par un groupe organique.

3. Particules fines de résine selon la revendication 1, où au moins l'un de $R_1$, $R_4$ et $R_6$ est un groupe alkyle ayant un nombre total de carbone de 8 ou plus.

4. Particules fines de résine selon la revendication 1, où au moins deux de $R_1$, $R_4$ et $R_5$ sont des groupes alkyles ayant un nombre total de carbone de 6 ou plus, ou des groupes alcényles ayant un nombre total de carbone de 6 ou plus, et ces groupes peuvent être substitués par un groupe organique.

5. Particules fines de résine selon la revendication 1, où au moins deux de $R_1$, $R_4$ et $R_5$ sont des groupes alkyles ayant un nombre total de carbone de 8 ou plus.

6. Particules fines de résine selon la revendication 1, où la totalité de $R_1$, $R_4$ et $R_5$ sont des groupes alkyles ayant un nombre total de carbone de 8 ou plus.

**7.** Particules fines de résine selon la revendication 1, où:

$R_1$ est un groupe alkyle linéaire ou ramifié ayant un nombre to tal de carbone de 8 à 20 ou un groupe alcoxycarbonylalkyle ayant un nombre total de carbone de 6 à 20.;
$R_3$ est $-NHSO_2R_9$ ayant un nombre total de carbone de 1 à 10 ou $-NHCOR_{10}$ ayant un nombre total de carbone de 2 à 10; et
$R_4$ et $R_5$ sont des groupes alkyles ayant un nombre total de carbone de 8 à 20.

**8.** Particules fines de résine selon l'une quelconque des revendications 1 à 7 avec un diamètre moyen de particule compris entre 0,005 et 0,8 µm.

**9.** Dispersion obtenue en dispersant dans un milieu aqueux des particules fines de résine selon l'une quelconque des revendications 1 à 8.

**10.** Encre aqueuse pour enregistrement à jet d'encre qui est une émulsion obtenue en émulsionnant une dispersion selon la revendication 9.